(19) **Europäisches Patentamt / European Patent Office / Office européen des brevets**

(11) **EP 4 561 210 A1**

(12) **EUROPEAN PATENT APPLICATION**
published in accordance with Art. 153(4) EPC

(43) Date of publication:
**28.05.2025 Bulletin 2025/22**

(21) Application number: **22951431.0**

(22) Date of filing: **19.07.2022**

(51) International Patent Classification (IPC):
**H04W 68/02** $^{(2009.01)}$

(52) Cooperative Patent Classification (CPC):
**H04W 68/02**

(86) International application number:
**PCT/CN2022/106428**

(87) International publication number:
**WO 2024/016152 (25.01.2024 Gazette 2024/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WEI, Dongdong**
  **Shenzhen, Guangdong 518129 (CN)**
• **MA, Jianglei**
  **Shenzhen, Guangdong 518129 (CN)**
• **WANG, Ting**
  **Shenzhen, Guangdong 518129 (CN)**
• **BI, Xiaoyan**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **PAGING METHOD AND COMMUNICATION APPARATUS**

(57)    This application provides a paging method and a communication apparatus. The paging method includes: A first communication apparatus receives paging information from a third communication apparatus, where the paging information includes first indication information, and the first indication information indicates the first communication apparatus and a second communication apparatus; and the second communication apparatus is configured to provide a service for the first communication apparatus, or the first communication apparatus is configured to provide a service for the second communication apparatus. The first communication apparatus establishes a connection to the second communication apparatus or the third communication apparatus based on the paging information. The paging information carries indication information indicating a terminal device and a network device that can provide a service for the terminal device. In this way, in this application, both the terminal device and the network device that can provide the service for the terminal device can be paged, thereby reducing an overall delay.

FIG. 3

Description

TECHNICAL FIELD

This application relates to the field of communication technologies, and more specifically, to a paging method and a communication apparatus.

BACKGROUND

Regardless of a long term evolution system or a new radio system, paging information triggered by a core network is sent by an access network device to a terminal device through a physical downlink shared channel. Transmission resources of the physical downlink shared channel are indicated by the access network device to the terminal device by scrambling a physical downlink control channel by using a paging radio network temporary identifier.

To reduce energy consumption on a network side, a communication system design in which signaling and data are separated is currently proposed. That is, access network devices include a data access network device and a signaling access network device. The data access network device focuses on user plane processing, may be enabled during data transmission, and may be disabled during no data transmission, to save energy. The signaling access network device focuses on signaling plane processing, is configured to provide wide area coverage of signaling, and always keeps online.

In a process in which a signaling access network device pages a terminal device, a data access network device corresponding to the terminal device may be in a sleep state due to no data transmission. To enable the data access network device to provide a data transmission service for the terminal device served by the data access network device, the terminal device needs to wake up the data access network device by sending a wake-up signal. However, such a manner may increase an overall delay.

SUMMARY

This application provides a paging method and a communication apparatus, to page both a terminal device and a network device that can provide a service for the terminal device, thereby reducing an overall delay.

According to a first aspect, a paging method is provided, and includes: A first communication apparatus receives paging information from a third communication apparatus, where the paging information includes first indication information, and the first indication information indicates the first communication apparatus and a second communication apparatus; and the second communication apparatus provides a service for the first communication apparatus, or the first communication apparatus provides a service for the second communication apparatus. The first communication apparatus establishes a connection to the second communication apparatus or the third communication apparatus based on the paging information.

The first communication apparatus may be a terminal device 120, or may be a chip in the terminal device 120 or an apparatus used in cooperation with the terminal device 120. The second communication apparatus may be a network device 130 that can provide a service for the terminal device 120, or may be a chip in the network device 130 or an apparatus used in cooperation with the network device 130. Alternatively, the second communication apparatus may be the terminal device 120, and the first communication apparatus may be the network device 130 that can provide a service for the terminal device 120. The third communication apparatus may be a network device 110, and the network device 110 is configured to provide a related configuration for the terminal device 120.

That the first communication apparatus establishes a connection to the second communication apparatus or the third communication apparatus based on the paging information may specifically include: The first communication apparatus establishes a first connection based on the paging information, where the first connection may be a connection between the first communication apparatus and the second communication apparatus, or may be a connection between the first communication apparatus and the third communication apparatus.

The paging information carries indication information indicating the terminal device and the network device that provides the service for the terminal device. In this way, in this application, both the terminal device and the network device that can provide the service for the terminal device can be paged, thereby reducing an overall delay.

In a possible implementation, the first indication information includes a first identifier and a second identifier, where the first identifier indicates the first communication apparatus, and the second identifier indicates the second communication apparatus.

Specifically, the paging information carries the first identifier and the second identifier, so that when receiving the paging information, the first communication apparatus can determine, based on the first identifier, that the paging information is related to the first communication apparatus. Correspondingly, when receiving the paging information, the second communication apparatus can determine, based on the second identifier, that the paging information is related to the second communication apparatus. In this way, in this application, both the terminal device and the network device that can provide the service for the terminal device can be paged, thereby reducing an overall delay.

In a possible implementation, the first indication information includes an index, and the index is associated with the first communication apparatus and the second communication apparatus.

There is a mapping relationship between the index and both the first communication apparatus and the second communication apparatus. The mapping relationship may be preconfigured or predefined in a protocol. The first communication apparatus or the second communication apparatus may determine, based on the received index and the mapping relationship, whether the paging information is related to the first communication apparatus or the second communication apparatus.

Optionally, the index may be associated with an identifier of the first communication apparatus and an identifier of the second communication apparatus.

Optionally, a specific form of the index is not limited in embodiments of this application.

In embodiments of this application, signaling overheads for paging both the first communication apparatus and the second communication apparatus can be reduced by using the index associated with the first communication apparatus and the second communication apparatus.

In a possible implementation, the paging information further includes beam information for communication between the first communication apparatus and the second communication apparatus.

In the foregoing implementation, beam alignment can be quickly implemented between the first communication apparatus and the second communication apparatus, thereby reducing an access delay.

In a possible implementation, a transmission resource on which the first communication apparatus receives the paging information is the same as a transmission resource on which the second communication apparatus receives the paging information.

Specifically, that the first communication apparatus and the second communication apparatus receive the paging information on a same transmission resource may be represented as that the first communication apparatus and the second communication apparatus share same paging configuration information. In this way, signaling overheads can be reduced in embodiments of this application.

In a possible implementation, the second communication apparatus provides the service for the first communication apparatus, and before the first communication apparatus receives the paging information from the third communication apparatus, the method further includes:

The first communication apparatus receives second indication information from the third communication apparatus, where the second indication information indicates at least one control resource set. The first communication apparatus determines a first control resource set in the at least one control resource set based on a parameter of the first communication apparatus, where there is an association relationship between the parameter of the first communication apparatus and the first control resource set; and each of the at least one control resource set is used to receive downlink control information, and the downlink control information indicates a transmission resource for receiving the paging information.

A plurality of control resource sets used to receive the downlink control information are indicated to the first communication apparatus, so that the first communication apparatus can select a proper control resource set based on the parameter. In this way, blind detection can be avoided being simultaneously performed on the plurality of control resource sets, and complexity of the first communication apparatus can be reduced.

In addition, in embodiments of this application, a plurality of control resource sets used to monitor the downlink control information are configured, so that a problem that control channel resources used to monitor the downlink control information are insufficient can be resolved, to increase a paging capacity.

In a possible implementation, the association relationship between the parameter of the first communication apparatus and the first control resource set is predefined in a protocol, or the association relationship between the parameter of the first communication apparatus and the first control resource set is indicated.

For example, the third communication apparatus sends, to the first communication apparatus, indication information indicating the association relationship between the parameter of the first communication apparatus and the first control resource set.

In embodiments of this application, the association relationship between the parameter of the first communication apparatus and the first control resource set can be more flexibly indicated to the first communication apparatus through indication. In embodiments of this application, notification overheads can be reduced in a manner of being predefined in a protocol.

In a possible implementation, the parameter of the first communication apparatus includes at least one of the following: a group identifier, a device identifier, or a beam index.

The first communication apparatus may determine a proper control resource set based on the foregoing parameter. In this way, complexity of determining a corresponding control resource set by the first communication apparatus can be reduced.

For example, when the parameter of the first communication apparatus includes the beam index, the first communication apparatus may directly determine the corresponding control resource set based on a synchronization signal block beam index of the first communication apparatus. In addition, a neighboring synchronization signal block beam index may be associated with a different control resource set (for example, at a different frequency domain location), thereby reducing interference.

In a possible implementation, the downlink control information further indicates at least one of the following: a system message change, earthquake and tsunami warning system information, a commercial mobile alert system message, or a notification of stopping paging detection.

According to a second aspect, a paging method is provided, and includes: A first communication apparatus receives configuration information from a third communication apparatus, where the configuration information is used to configure a first transmission resource and at least one second transmission resource, the first transmission resource is used to receive downlink control information, the second transmission resource is used to receive paging information, and the downlink control information indicates to receive the paging information. The first communication apparatus receives the downlink control information from the third communication apparatus and the paging information from a second communication apparatus based on the configuration information.

Specifically, the first communication apparatus separately receives the downlink control information and the paging information from the different communication apparatuses based on the configuration information sent by the third communication apparatus. In this way, in embodiments of this application, the first communication apparatus can receive the paging information on a transmission resource different from a transmission resource for receiving the downlink control information, thereby resolving an existing problem that physical downlink shared channel resources for sending the paging information are insufficient.

Specifically, the first communication apparatus may receive the paging information based on the second transmission resource, and the downlink control information received based on the first transmission resource indicates to receive the paging information. In this way, an existing limitation that a resource for receiving the paging information cannot exceed a size of a control resource set #0 can be overcome, and a transmission resource for transmitting the paging information is further increased.

In a possible implementation, a carrier corresponding to the first transmission resource is different from a carrier corresponding to the second transmission resource.

In this way, cross-carrier scheduling of the paging information can be supported.

In a possible implementation, the configuration information includes at least one of the following: a cell identifier corresponding to the second transmission resource, a start location and a size of the second transmission resource, a resource number of the second transmission resource, or a carrier number of the second transmission resource.

The first communication apparatus may determine more detailed information of the second transmission resource based on the foregoing information, so that the first communication apparatus receives the paging information on the second transmission resource.

In a possible implementation, a cell identifier for scrambling the first transmission resource is different from a cell identifier for scrambling the second transmission resource.

In embodiments of this application, different cell identifiers are used to scramble different transmission resources, so that reuse of a current implementation can be supported. In this way, implementation complexity of a cross-carrier scheduling scenario of the paging information is reduced.

In a possible implementation, the method further includes: The first communication apparatus receives third indication information from the third communication apparatus, where the third indication information indicates whether quasi co-location of the first transmission resource is the same as quasi co-location of the second transmission resource.

Specifically, the first communication apparatus may determine, depending on whether the quasi co-location of the first transmission resource and the quasi co-location of the second transmission resource that are indicated by the third indication information are the same, whether quasi co-location information for receiving the downlink control information can be reused when the paging information is received. For example, if the quasi co-location of the first transmission resource and the quasi co-location of the second transmission resource that are indicated by the third indication information are the same, the quasi co-location information for receiving the downlink control information may be reused; or if the quasi co-location of the first transmission resource and the quasi co-location of the second transmission resource that are indicated by the third indication information are different, the quasi co-location information for receiving the downlink control information is not reused.

In a possible implementation, the method further includes: The first communication apparatus receives fourth indication information from the third communication apparatus, where the fourth indication information indicates beam information for communication between the first communication apparatus and the second communication apparatus.

Specifically, the downlink control information and the paging information that are received by the first communication apparatus are from different communication apparatuses, and the first communication apparatus may determine, based on the fourth indication information, beam information for receiving the paging information. To be specific, the indication information indicates a beam that needs to be used by the first communication apparatus to receive the paging information, to avoid a case in which the first communication apparatus cannot receive the paging information.

In a possible implementation, the third indication information or the fourth indication information further indicates at least one of the following: a quantity of time units of an interval between the first transmission resource and the second transmission resource, or a cyclic prefix length of the second transmission resource.

In embodiments of this application, a delay between the first transmission resource and the second transmission resource is indicated, so that the first communication apparatus can receive the second transmission resource at a proper time point, to avoid a case in which the first communication apparatus fails to receive the paging information because the first communication apparatus receives the paging information in advance. In addition, this can also reduce energy consumption of the first communication apparatus.

In a possible implementation, the time unit includes at least one of the following: a slot, a mini-slot (mini-slot), a non-slot (non-slot), or a symbol.

For example, a new radio communication system supports scheduling of the mini-slot, and the mini-slot may start from any orthogonal frequency division multiplexing (orthogonal frequency division multiplexing, OFDM) symbol of a slot. A downlink mini-slot may be 2, 4, or 7 OFDM symbols, and an uplink mini-slot may be any length within 1 to 14 OFDM symbols. The mini-slot may also be referred to as a non-slot.

According to a third aspect, a paging method is provided, and includes: A third communication apparatus determines paging information, where the paging information includes first indication information, and the first indication information indicates a first communication apparatus and a second communication apparatus; and the second communication apparatus provides a service for the first communication apparatus, or the first communication apparatus provides a service for the second communication apparatus. The third communication apparatus sends the paging information to the first communication apparatus and the second communication apparatus.

In a possible implementation, the first indication information includes a first identifier and a second identifier, where the first identifier indicates the first communication apparatus, and the second identifier indicates the second communication apparatus.

In a possible implementation, the first indication information includes an index, and the index is associated with the first communication apparatus and the second communication apparatus.

In a possible implementation, the paging information further includes beam information for communication between the first communication apparatus and the second communication apparatus.

In a possible implementation, a transmission resource on which the first communication apparatus receives the paging information is the same as a transmission resource on which the second communication apparatus receives the paging information.

In a possible implementation, the second communication apparatus provides the service for the first communication apparatus, and before the third communication apparatus sends the paging information to the first communication apparatus, the method further includes: The third communication apparatus sends second indication information to the first communication apparatus, where the second indication information indicates at least one control resource set, where each of the at least one control resource set is used to receive downlink control information, and the downlink control information indicates a transmission resource for receiving the paging information, where there is an association relationship between each of the at least one control resource set and a parameter of the first communication apparatus.

In a possible implementation, the association relationship between each of the at least one control resource set and the parameter of the first communication apparatus is predefined in a protocol; or the association relationship between each of the at least one control resource set and the parameter of the first communication apparatus is indicated.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a fourth aspect, a paging method is provided, and includes: A third communication apparatus sends configuration information to a first communication apparatus, where the configuration information is used to configure a first transmission resource and at least one second transmission resource, the first transmission resource is used to receive downlink control information, the second transmission resource is used to receive paging information, and the downlink control information indicates to receive the paging information. The third communication apparatus sends the downlink control information to the first communication apparatus.

In a possible implementation, a carrier corresponding to the first transmission resource is different from a carrier corresponding to the second transmission resource.

In a possible implementation, the configuration information includes at least one of the following: a cell identifier corresponding to the second transmission resource, a start location and a size of the second transmission resource, a resource number of the second transmission resource, or a carrier number of the second transmission resource.

In a possible implementation, a cell identifier for scrambling the first transmission resource is different from a cell identifier for scrambling the second transmission resource.

In a possible implementation, the method further includes: The third communication apparatus sends third indication information to the first communication apparatus, where the third indication information indicates whether quasi co-location of the first transmission resource is the same as quasi co-location of the second transmission resource.

In a possible implementation, the method further includes: The third communication apparatus sends fourth indication information to the first communication apparatus, where the fourth indication information indicates beam information for communication between the first communication apparatus and the second communication apparatus.

In a possible implementation, the third indication information or the fourth indication information further indicates at least one of the following: a quantity of time units of an interval between the first transmission resource and the second transmission resource; or a cyclic prefix length of the second transmission resource.

In a possible implementation, the time unit includes at least one of the following: a slot, a mini-slot, a non-slot, or a symbol.

According to a fifth aspect, a paging method is provided, and includes: A first communication apparatus receives second indication information from a third communication apparatus, where the second indication information indicates at least one control resource set. The first communication apparatus determines a first control resource set in the at least one control resource set based on a parameter of the first communication apparatus, where there is an association relationship between the parameter of the first communication apparatus and the first control resource set; and each of the at least one control resource set is used to receive downlink control information, and the downlink control information indicates a transmission resource for receiving paging information.

A plurality of control resource sets used to receive the downlink control information are indicated to the first communication apparatus, so that the first communication apparatus can select a proper control resource set based on the parameter of the first communication apparatus. In this way, blind detection can be avoided being simultaneously performed on the plurality of control resource sets, and complexity of the first communication apparatus can be reduced.

In addition, in embodiments of this application, a plurality of control resource sets used to monitor the downlink control information are configured, so that a problem that control channel resources used to monitor the downlink control information are insufficient can be resolved, to increase a paging capacity.

In a possible implementation, the association relationship between the parameter of the first communication apparatus and the first control resource set may be predefined in a protocol, or the association relationship between the parameter of the first communication apparatus and the first control resource set may be indicated.

For example, the third communication apparatus sends, to the first communication apparatus, indication information indicating the association relationship between the parameter of the first communication apparatus and the first control resource set.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a sixth aspect, a paging method is provided, and includes: A third communication apparatus sends second indication information to a first communication apparatus, where the second indication information indicates at least one control resource set, where each of the at least one control resource set is used to receive downlink control information, and the downlink control information indicates a transmission resource for receiving the paging information, where there is an association relationship between each of the at least one control resource set and a parameter of the first communication apparatus.

In a possible implementation, the association relationship between each of the at least one control resource set and the parameter of the first communication apparatus is predefined in a protocol; or the association relationship between each of the at least one control resource set and the parameter of the first communication apparatus is indicated.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a seventh aspect, a communication apparatus is provided. The communication apparatus may be used in the first communication apparatus in the first aspect. The communication apparatus may be a terminal device or a network device, or may be an apparatus (for example, a chip, a chip system, or a circuit) in the terminal device or the network device, or may be an apparatus that can be used in cooperation with the terminal device or the network device.

In a possible implementation, the communication apparatus may include modules or units that one to one correspond to the methods/operations/steps/actions described in the first aspect. The modules or units may be hardware circuits or software, or may be implemented by a hardware circuit in combination with software.

In a possible implementation, the communication apparatus includes: a receiving unit, configured to receive paging information from a third communication apparatus, where the paging information includes first indication information, and the first indication information indicates the communication apparatus and a second communication apparatus; and the second communication apparatus provides a service for the communication apparatus, or the communication apparatus provides a service for the second communication apparatus; and a processing unit, configured to establish a connection to the second communication apparatus or the third communication apparatus based on the paging information.

In a possible implementation, the first indication information includes a first identifier and a second identifier, where the first identifier indicates the communication apparatus, and the second identifier indicates the second communication apparatus.

In a possible implementation, the first indication information includes an index, and the index is associated with the communication apparatus and the second communication apparatus.

In a possible implementation, the paging information further includes beam information for communication between the communication apparatus and the second communication apparatus.

In a possible implementation, a transmission resource on which the communication apparatus receives the paging information is the same as a transmission resource on which the second communication apparatus receives the paging information.

In a possible implementation, the second communication apparatus provides the service for the communication apparatus. The receiving unit is further configured to receive second indication information from the third communication apparatus, where the second indication information indicates at least one control resource set.

The processing unit is further configured to determine a first control resource set in the at least one control resource set based on a parameter of the communication apparatus, where there is an association relationship between the parameter of the communication apparatus and the first control resource set; and each of the at least one control resource set is used to receive downlink control information, and the downlink control information indicates a transmission resource for receiving the paging information.

In a possible implementation, the association relationship between the parameter of the communication apparatus and the first control resource set is predefined in a protocol, or the association relationship between the parameter of the communication apparatus and the first control resource set is indicated.

In a possible implementation, the parameter of the communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to an eighth aspect, a communication apparatus is provided. The communication apparatus may be used in the first communication apparatus in the second aspect. The communication apparatus may be a terminal device or a network device, or may be an apparatus (for example, a chip, a chip system, or a circuit) in the terminal device or the network device, or may be an apparatus that can be used in cooperation with the terminal device or the network device.

In a possible implementation, the communication apparatus may include modules or units that one to one correspond to the methods/operations/steps/actions described in the second aspect. The modules or units may be hardware circuits or software, or may be implemented by a hardware circuit in combination with software.

In a possible implementation, the communication apparatus includes: a receiving unit, configured to receive configuration information from a third communication apparatus, where the configuration information is used to configure a first transmission resource and at least one second transmission resource, the first transmission resource is used to receive downlink control information, the second transmission resource is used to receive paging information, and the downlink control information indicates to receive the paging information. The receiving unit is further configured to receive downlink control information from the third communication apparatus and paging information from a second communication apparatus based on the configuration information.

In a possible implementation, a carrier corresponding to the first transmission resource is different from a carrier corresponding to the second transmission resource.

In a possible implementation, the configuration information includes at least one of the following: a cell identifier corresponding to the second transmission resource, a start location and a size of the second transmission resource, a resource number of the second transmission resource, or a carrier number of the second transmission resource.

In a possible implementation, a cell identifier for scrambling the first transmission resource is different from a cell identifier for scrambling the second transmission resource.

In a possible implementation, the receiving unit is further configured to receive third indication information from the third communication apparatus, where the third indication information indicates whether quasi co-location of the first transmission resource is the same as quasi co-location of the second transmission resource.

In a possible implementation, the receiving unit is further configured to receive fourth indication information from the third communication apparatus, where the fourth indication information indicates beam information for communication between the first communication apparatus and the second communication apparatus.

In a possible implementation, the third indication information or the fourth indication information further indicates at least one of the following: a quantity of time units of an interval between the first transmission resource and the second transmission resource, or a cyclic prefix length of the second transmission resource.

In a possible implementation, the time unit includes at least one of the following: a slot, a mini-slot, a non-slot, or a symbol.

According to a ninth aspect, a communication apparatus is provided. The communication apparatus may be used in the third communication apparatus in the third aspect. The communication apparatus may be a network device, or may be an apparatus (for example, a chip, a chip system, or a circuit) in the network device, or may be an apparatus that can be used in cooperation with the terminal device or the network device.

In a possible implementation, the communication apparatus may include modules or units that one to one correspond to the methods/operations/steps/actions described in the third aspect. The modules or units may be hardware circuits or software, or may be implemented by a hardware circuit in combination with software.

In a possible implementation, the communication apparatus includes: a processing unit, configured to determine paging information, where the paging information includes first indication information, and the first indication information indicates a first communication apparatus and a second communication apparatus; and the second communication apparatus provides a service for the first communication apparatus, or the first communication apparatus provides a service for the second communication apparatus; and a sending unit, configured to send the paging information to the first communication apparatus and the second communication apparatus.

In a possible implementation, the first indication information includes a first identifier and a second identifier, where the first identifier indicates the first communication apparatus, and the second identifier indicates the second communication apparatus.

In a possible implementation, the first indication information includes an index, and the index is associated with the first communication apparatus and the second communication apparatus.

In a possible implementation, the paging information further includes beam information for communication between the first communication apparatus and the second communication apparatus.

In a possible implementation, a transmission resource on which the first communication apparatus receives the paging information is the same as a transmission resource on which the second communication apparatus receives the paging information.

In a possible implementation, the second communication apparatus provides the service for the first communication apparatus. The sending unit is further configured to send second indication information to the first communication apparatus, where the second indication information indicates at least one control resource set; and each of the at least one control resource set is used to receive downlink control information, and the downlink control information indicates a transmission resource for receiving the paging information, where there is an association relationship between each of the at least one control resource set and a parameter of the first communication apparatus.

In a possible implementation, the association relationship between each of the at least one control resource set and the parameter of the first communication apparatus is predefined in a protocol; or the association relationship between each of the at least one control resource set and the parameter of the first communication apparatus is indicated.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a tenth aspect, a communication apparatus is provided. The communication apparatus may be used in the third communication apparatus in the fourth aspect. The communication apparatus may be a network device, or may be an apparatus (for example, a chip, a chip system, or a circuit) in the network device, or may be an apparatus that can be used in cooperation with the terminal device or the network device.

In a possible implementation, the communication apparatus may include modules or units that one to one correspond to the methods/operations/steps/actions described in the fourth aspect. The modules or units may be hardware circuits or software, or may be implemented by a hardware circuit in combination with software.

In a possible implementation, the communication apparatus includes: a sending unit, configured to send configuration information to a first communication apparatus, where the configuration information is used to configure a first transmission resource and at least one second transmission resource, the first transmission resource is used to receive downlink control information, the second transmission resource is used to receive paging information, and the downlink control information indicates to receive the paging information. The sending unit is further configured to send the downlink control information to the first communication apparatus.

In a possible implementation, a carrier corresponding to the first transmission resource is different from a carrier corresponding to the second transmission resource.

In a possible implementation, the configuration information includes at least one of the following: a cell identifier corresponding to the second transmission resource, a start location and a size of the second transmission resource, a resource number of the second transmission resource, or a carrier number of the second transmission resource.

In a possible implementation, a cell identifier for scrambling the first transmission resource is different from a cell identifier for scrambling the second transmission resource.

In a possible implementation, the sending unit is further configured to send third indication information to the first communication apparatus, where the third indication information indicates whether quasi co-location of the first transmission resource is the same as quasi co-location of the second transmission resource.

In a possible implementation, the sending unit is further configured to send fourth indication information to the first communication apparatus, where the fourth indication information indicates beam information for communication between the first communication apparatus and the second communication apparatus.

In a possible implementation, the third indication information or the fourth indication information further indicates at least one of the following: a quantity of time units of an interval between the first transmission resource and the second transmission resource; or a cyclic prefix length of the second transmission resource.

In a possible implementation, the time unit includes at least one of the following: a slot, a mini-slot, a non-slot, or a symbol.

According to an eleventh aspect, a communication apparatus is provided. The communication apparatus may be used in the first communication apparatus in the fifth aspect. The communication apparatus may be a terminal device or a network device, or may be an apparatus (for example, a chip, a chip system, or a circuit) in the terminal device or the network device, or may be an apparatus that can be used in cooperation with the terminal device or the network device.

In a possible implementation, the communication apparatus may include modules or units that one to one correspond to the methods/operations/steps/actions described in the fifth aspect. The modules or units may be hardware circuits or software, or may be implemented by a hardware circuit in combination with software.

In a possible implementation, the communication apparatus includes: a receiving unit, configured to receive second indication information from a third communication apparatus, where the second indication information indicates at least one control resource set; and a processing unit, further configured to determine a first control resource set in the at least one control resource set based on a parameter of the first communication apparatus, where there is an association relationship between the parameter of the first communication apparatus and the first control resource set; and each of the at least one control resource set is used to receive downlink control information, and the downlink control information indicates a transmission resource for receiving the paging information.

In a possible implementation, the association relationship between the parameter of the first communication apparatus and the first control resource set is predefined in a protocol; or the association relationship between the parameter of the first communication apparatus and the first control resource set is indicated.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a twelfth aspect, a communication apparatus is provided. The communication apparatus may be used in the third communication apparatus in the sixth aspect. The communication apparatus may be a network device, or may be an apparatus (for example, a chip, a chip system, or a circuit) in a terminal device or the network device, or may be an apparatus that can be used in cooperation with the terminal device or the network device.

In a possible implementation, the communication apparatus may include modules or units that one to one correspond to the methods/operations/steps/actions described in the sixth aspect. The modules or units may be hardware circuits or software, or may be implemented by a hardware circuit in combination with software.

In a possible implementation, the communication apparatus includes: a sending unit, configured to send second indication information to a first communication apparatus, where the second indication information indicates at least one control resource set, where each of the at least one control resource set is used to receive downlink control information, and the downlink control information indicates a transmission resource for receiving the paging information, where there is an association relationship between each of the at least one control resource set and a parameter of the first communication apparatus.

In a possible implementation, the association relationship between each of the at least one control resource set and the parameter of the first communication apparatus is predefined in a protocol; or the association relationship between each of the at least one control resource set and the parameter of the first communication apparatus is indicated.

In a possible implementation, the parameter of the first communication apparatus includes at least one of the following: a group identifier, a device identifier, or a beam index.

In a possible implementation, the downlink control information further indicates at least one of the following: a system message change, earthquake and tsunami warning system information, a commercial mobile alert system message, or a notification of stopping paging detection.

According to a thirteenth aspect, a communication apparatus is provided, and includes a processor. The processor is coupled to a memory, and the processor is configured to execute a computer program or instructions, to enable the communication apparatus to perform the method according to any one of the first aspect and the possible implementations of the first aspect; or enable the communication apparatus to perform the method according to any one of the second aspect and the possible implementations of the second aspect; or enable the communication apparatus to perform the method according to any one of the third aspect and the possible implementations of the third aspect; or enable the communication apparatus to perform the method according to any one of the fourth aspect and the possible implementations of the fourth aspect; or enable the communication apparatus to perform the method according to any one of the fifth aspect and the possible implementations of the fifth aspect; or enable the communication apparatus to perform the method according to any one of the sixth aspect and the possible implementations of the sixth aspect.

In a possible implementation, the apparatus further includes the memory. Optionally, the processor and the memory are integrated together, or the processor and the memory are disposed separately.

In another possible implementation, the memory is located outside the communication apparatus.

In a possible implementation, the communication apparatus further includes a communication interface. The communication interface is used by the communication apparatus to communicate with another device, for example, send or receive data and/or a signal. For example, the communication interface may be a transceiver, a circuit, a bus, a module, or another type of communication interface.

According to a fourteenth aspect, a communication apparatus is provided, and includes a logic circuit and an input/output interface. The input/output interface is configured to output and/or input a signal, and the logic circuit is configured to perform the method according to any one of the first aspect and the possible implementations of the first aspect; or perform the method according to any one of the second aspect and the possible implementations of the second aspect; or perform the method according to any one of the third aspect and the possible implementations of the third aspect; or perform the method according to any one of the fourth aspect and the possible implementations of the fourth aspect; or perform the method according to any one of the fifth aspect and the possible implementations of the fifth aspect; or perform the method according to any one of the sixth aspect and the possible implementations of the sixth aspect.

In a possible implementation, the input/output interface is configured to receive paging information from a third communication apparatus, where the paging information includes first indication information, and the first indication information indicates the first communication apparatus and a second communication apparatus; and the second communication apparatus provides a service for the first communication apparatus, or the first communication apparatus provides a service for the second communication apparatus. The logic circuit is configured to establish a connection to the second communication apparatus or the third communication apparatus based on the paging information.

In a possible implementation, the input/output interface is configured to receive configuration information from a third communication apparatus, where the configuration information is used to configure a first transmission resource and at least one second transmission resource, the first transmission resource is used to receive downlink control information, the second transmission resource is used to receive paging information, and the downlink control information indicates to receive the paging information. The input/output interface is further configured to receive downlink control information from the third communication apparatus and paging information from a second communication apparatus based on the configuration information.

In a possible implementation, the logic circuit is configured to determine paging information, where the paging information includes first indication information, and the first indication information indicates a first communication apparatus and a second communication apparatus; and the second communication apparatus provides a service for the first communication apparatus, or the first communication apparatus provides a service for the second communication apparatus. The input/output interface is configured to send the paging information to the first communication apparatus and the second communication apparatus.

In a possible implementation, the input/output interface is configured to send configuration information to a first communication apparatus, where the configuration information is used to configure a first transmission resource and at least one second transmission resource, the first transmission resource is used to receive downlink control information, the second transmission resource is used to receive paging information, and the downlink control information indicates to receive the paging information. The input/output interface is further configured to send the downlink control information to the first communication apparatus.

In a possible implementation, the input/output interface is configured to receive second indication information from a third communication apparatus, where the second indication information indicates at least one control resource set. The logic circuit is configured to determine a first control resource set in the at least one control resource set based on a parameter of the first communication apparatus, where there is an association relationship between the parameter of the first communication apparatus and the first control resource set; and each of the at least one control resource set is used to receive downlink control information, and the downlink control information indicates a transmission resource for receiving the paging information.

In a possible implementation, the input/output interface is configured to send second indication information to a first communication apparatus, where the second indication information indicates at least one control resource set; and each of the at least one control resource set is used to receive downlink control information, and the downlink control information indicates a transmission resource for receiving the paging information, where there is an association relationship between each of the at least one control resource set and a parameter of the first communication apparatus.

According to a fifteenth aspect, a computer-readable storage medium is provided, and includes a computer program or instructions. When the computer program or the instructions are run on a computer, the computer is enabled to perform the method according to any one of the first aspect or the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect; or the computer is enabled to perform the method according to any one of the fifth aspect and the possible implementations of the fifth aspect; or the computer is enabled to perform the method according to any one of the sixth aspect and the possible implementations of the sixth aspect.

According to a sixteenth aspect, a computer program product is provided, and includes instructions. When the instructions are run on a computer, the computer is enabled to perform the method according to any one of the first aspect and the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect; or the computer is enabled to perform the method according to any one of the fifth aspect and the possible implementations of the fifth aspect; or the computer is enabled to perform the method according to any one of the sixth aspect and the possible implementations of the sixth aspect.

According to a seventeenth aspect, an embodiment of this application further provides a first communication apparatus, configured to perform the method according to the first aspect and the possible implementations of the first aspect; or perform the method according to the second aspect and the possible implementations of the second aspect; or perform the method according to the fifth aspect and the possible implementations of the fifth aspect.

According to an eighteenth aspect, an embodiment of this application further provides a third communication apparatus, configured to perform the method according to the third aspect and the possible implementations of the third aspect; or perform the method according to the fourth aspect and the possible implementations of the fourth aspect; or perform the method according to the sixth aspect and the possible implementations of the sixth aspect.

According to a nineteenth aspect, an embodiment of this application further provides a communication system, including the first communication apparatus provided in the seventh aspect, the eighth aspect, the eleventh aspect, and the possible implementations of the foregoing aspects, and the third communication apparatus provided in the ninth aspect, the tenth aspect, the twelfth aspect, and the possible implementations of the foregoing aspects.

Optionally, the communication system may further include a second communication apparatus. Actions or steps performed by the second communication apparatus are similar to the actions or steps performed by the first communication apparatus. For details, refer to the foregoing content. Details are not described herein again.

## BRIEF DESCRIPTION OF DRAWINGS

FIG. 1 is a diagram of a communication system 100 applicable to an embodiment of this application;
FIG. 2 is a schematic flowchart of an existing paging method 200;
FIG. 3 is a schematic interaction flowchart of a paging method 300 according to an embodiment of this application;
FIG. 4 is a schematic interaction flowchart of a paging method 400 according to an embodiment of this application;
FIG. 5 is a schematic interaction flowchart of a paging method 500 according to an embodiment of this application;
FIG. 6 is a schematic block diagram of a communication apparatus 600 according to an embodiment of this application;
FIG. 7 is a schematic block diagram of a communication apparatus 700 according to an embodiment of this application; and
FIG. 8 is a schematic block diagram of a communication apparatus 800 according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G such as a 6th generation (6th generation, 6G) system, or a non-terrestrial network (non-terrestrial network, NTN) system such as inter-satellite communication and satellite communication. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like such as an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD/TDD system. The technical solutions in embodiments of this application are applicable to not only a low-frequency scenario (sub 6G), but also a high-frequency scenario (above 6GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application may also be applied to a scenario in which the terminal is connected to a single base station. A base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application are also applicable to a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

It may be further understood that, the technical solutions in embodiments of this application may be further applied to 5.5G, 6G, and a wireless communication system after 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component.

The network device in embodiments of this application is a device having a wireless transceiver function, and is configured to communicate with the terminal device. The access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network such as a gNodeB (gNB), a base station in an evolved public land mobile network (public land mobile network, PLMN) after 5G, a broadband network gateway (broadband network gateway, BNG), an aggregation switch, a 3rd generation partner project (3rd generation partnership project, 3GPP) access device, or the like.

The network device in embodiments of this application may further include base stations in various forms, for example, a macro base station, a micro base station (also referred to as a small cell), a relay station, a transmission point (transmission reception point, TRP), a transmission point (transmission point, TP), a mobile switching center, and a device or the like that undertakes a function of the base station in device-to-device (device-to-device, D2D) communication, vehicle-to-everything (vehicle-to-everything, V2X) communication, and machine-to-machine (machine-to-machine, M2M) communication. The network device may further include a central unit (central unit, CU) and a distributed unit (distributed unit, DU) in a cloud access network (cloud radio access network, C-RAN) system, and a network device in an NTN communication system. This is not specifically limited in embodiments of this application.

In embodiments of this application, an apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

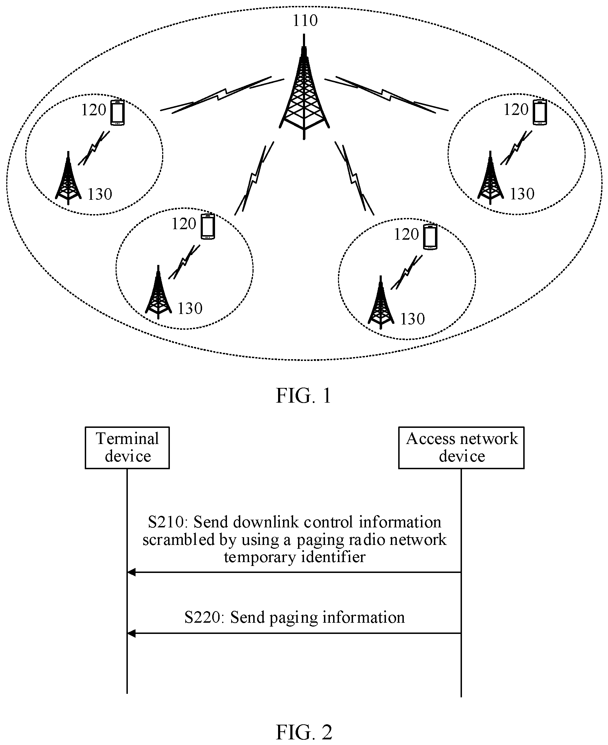

FIG. 1 is a diagram of a communication system 100 applicable to an embodiment of this application. As shown in FIG. 1, the communication system 100 includes a network device 110, a plurality of terminal devices 120, and a plurality of network devices 130. In addition, quantities of terminal devices and network devices that are included in the communication system 100 are not limited in embodiments of this application. It should be noted that, the diagram shown in FIG. 1 is merely used as an example for understanding, and cannot limit the protection scope claimed in this application.

It may be understood that, the terminal device 120 shown in FIG. 1 may be any terminal device listed above. The network device 110 and the network device 130 may also be any network device listed above.

In the communication system 100, the network device 110 may be a wide-coverage base station (for example, may be a signaling base station), and is configured to provide a signaling service for a terminal device within coverage of the network device 110. In addition to the network device 110, the terminal device 120 may be further connected to the network device 130. The network device 130 may be a small-coverage base station (for example, may be a data base station, a common base station, or a small cell), and is configured to provide a service, for example, a data transmission service, for a terminal device within coverage of the network device 130. The network device 130 may be enabled or disabled depending on whether a service needs to be provided, to save energy.

The following describes an existing paging procedure.

FIG. 2 is a schematic flowchart of an existing paging method 200. As shown in FIG. 2, the paging method 200 is performed by a terminal device and an access network device. The paging method 200 includes the following steps.

S210: The access network device sends, to the terminal device, downlink control information (downlink control information, DCI) scrambled by using a paging radio network temporary identifier (paging radio network temporary identifier, P-RNTI).

Correspondingly, the terminal device receives, from the access network device, the downlink control information scrambled by the paging radio network temporary identifier.

For a terminal device in an idle state, the terminal device needs to periodically wake up and monitor a physical downlink control channel (physical downlink control channel, PDCCH) scrambled by using the P-RNTI, and parse DCI carried on the PDCCH. In addition to indicating a short message (short message) to the terminal device, the DCI scrambled by using the P-RNTI can be further used to schedule a transmission resource of a physical downlink shared channel (physical downlink shared channel, PDSCH) that carries paging information (paging message).

Specifically, the terminal device can determine, based on the DCI that is scrambled by using the P-RNTI and that is received by the terminal device, that the DCI is a paging indication, and can further determine, based on the DCI scrambled by using the P-RNTI, the transmission resource that is of the PDSCH and that is for receiving the paging information.

S220: The access network device sends the paging information to the terminal device.

Correspondingly, the terminal device receives the paging information from the access network device.

The terminal device can determine, based on the DCI that is scrambled by using the P-RNTI and that is received by the terminal device, the transmission resource that is of the PDSCH and that is for receiving the paging information, and receive the paging information from the access network device on the transmission resource of the PDSCH.

Further, the terminal device may parse and obtain content of the paging information.

As described above, the terminal device and the access network device complete the paging procedure.

Further, paging (paging) is a process of searching for or waking up the terminal device. The paging process may be classified into two types: a paging process triggered by a core network (core network, CN) and a paging process triggered by the access network device. The following mainly describes the paging process triggered by the core network.

Paging information triggered by the core network needs to be sent to the terminal device through the access network device. For example, the core network sends the paging information to the access network device through an NG interface, and then the access network device sends the paging information to the terminal device.

Regardless of an LTE system or an NR system, the paging information triggered by the core network is sent by the access network device to the terminal device through the PDSCH. The transmission resource of the PDSCH is indicated by the access network device to the terminal device by scrambling the PDCCH by using the P-RNTI. Therefore, before receiving the paging information, the terminal device needs to first monitor the PDCCH channel, and determine, depending on whether the PDCCH carries the DCI of the P-RNTI, whether the paging information is sent in a paging cycle.

To reduce power consumption of the terminal device in a radio resource control_idle (radio resource control_idle, RRC_IDLE)/inactive (RRC_INACTIVE) state, the terminal device receives the paging information through discontinuous reception (discontinuous reception, DRX). One DRX cycle (cycle) includes at least one paging frame (paging frame, PF). One PF corresponds to at least one paging occasion (paging occasion, PO). The terminal device needs to wake up only once in one DRX cycle to monitor one PO. In addition, the DRX cycle represents a cycle in which the terminal device detects paging, the PF represents a system frame in which the terminal device detects paging, and the PO represents a specific PDCCH monitoring occasion (monitoring occasion) on which the terminal device detects paging.

The terminal device may calculate and determine locations of the PF and the PO by using related formulas. For example, details are as follows:

$$PF: (SFN + PF\_offset) \bmod T = (T \operatorname{div} N)*(UE\_ID \bmod N);$$

and

i_s: floor $(UE\_ID/N) \bmod N_S = 0$.

The SFN represents a system frame number (system frame number, SFN). T represents the DRX cycle. Usually, system information includes cell-level $T_c$, and may also include UE-level $T_{UE}$. If no $T_{UE}$ is indicated, $T = T_{UE}$. If $T_{UE}$ is indicated, $T = \min\{T_c, T_{UE}\}$. N represents a total quantity of PFs in T. Ns represents a quantity of POs corresponding to one PF. PF_offset represents an offset of the PF. UE_ID represents a remainder of an international mobile subscriber identity (international mobile subscriber identity, IMSI) of the UE mod 1024, where mod is a modulo operation. floor represents a function for rounding down. i_s represents an index (index) of the PO corresponding to the PF.

It may be understood that, the access network device may broadcast paging-related configuration information by using paging control channel (paging control channel, PCCH)-configuration (configuration, Config) information in a system information block (system information block, SIB). For example, the paging-related configuration information may include a paging cycle (DRX cycle), an offset of the PF in the paging cycle, and a start location of the PO. The terminal device determines, based on the configuration information and identification information of the terminal device, a corresponding PO in each paging cycle. For example, for content of the configuration information, refer to Table 1.

Table 1

| IMSI | 404685505601234 |
|---|---|
| $T_c$ | 128 |
| $T_{UE}$ | 32 |
| T | $T = \min\{T_c, T_{UE}\} = 32$ |
| nB | $= T/2 = 16$ |
| UE_ID | IMSI mod 1024 = 722 |
| N | $N = \min\{T, nB\} = 16$ |
| $N_S$ | $N_S = \max\{1, nB/T\} = 1$ |
| i_s | i_s = floor $(UE\_ID/N) \bmod N_S = 0$ |
| PF | SFN mod T = (T div N)*(UE_ID mod N); and PF: SFN mod 32 = 4 |

(continued)

| PO | Based on $N_S$ and i_s, it can be learned from the table that a subframe number is 9. |
|---|---|

It can be learned from the content shown in Table 1 that, the terminal device needs to wake up once at an interval of 320 ms (T*10 ms) and attempt to receive paging information. In a DRX cycle, one PF in every two system frames (N=16) may be used to send the paging information. Different terminal devices may select, based on different UE_ID of the terminal devices, a corresponding PO from 16 POs in the DRX cycle to receive the paging information.

In the scenario shown in FIG. 1, to reduce energy consumption on a network side and keep a user service online, the network device 110 configured to provide a signaling service for the terminal device 120 needs to keep online. The network device 130 that provides a data transmission service for the terminal device 120 is enabled during data transmission occurs, and is disabled during no data transmission. The network device 130 may support a plurality of forms, for example, an active state, a sleep state, and an uplink transmission only (UL only) state. When there is no terminal device in a connected (RRC-CONNECTED) state within coverage of the network device 130, the network device 130 may enter a sleep state. In this case, a paging operation is performed by the network device 110. When the network device 110 performs an operation of paging the terminal device 120, if the terminal device 120 that needs to be paged is within the coverage of the network device 130 in the sleep state, after the terminal device 120 is woken up, the terminal device 120 also needs to wake up the network device 130 that corresponds to the terminal device 120 and that is in the sleep state, so that the network device 130 can provide the data transmission service for the terminal device 120.

However, in a paging manner in which the network device 110 first wakes up the terminal device 120 and then the terminal device 120 wakes up the corresponding network device 130, a time point of starting the network device 130 is late, and an overall delay is increased.

To resolve the foregoing technical problem, this application provides a paging method and a communication apparatus. The paging information carries indication information indicating the terminal device and the network device that can provide the service for the terminal device. In this way, in this application, both the terminal device and the network device that can provide the service for the terminal device can be paged, thereby reducing an overall delay.

The following describes a paging method in embodiments of this application with reference to accompanying drawings.

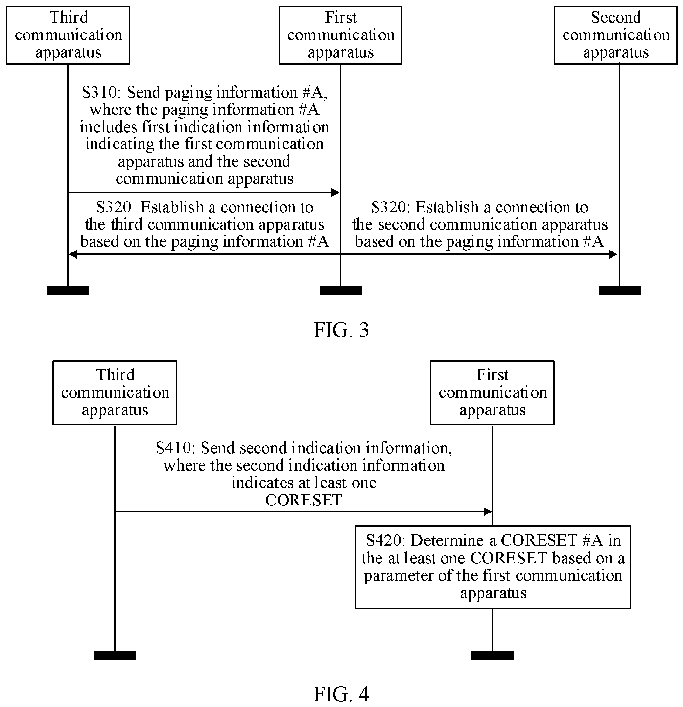

FIG. 3 is an interaction flowchart of a paging method 300 according to an embodiment of this application. A method procedure in FIG. 3 may be performed by a first communication apparatus/a third communication apparatus, or may be performed by a module and/or a component (for example, a chip or an integrated circuit) that is installed in the first communication apparatus/the third communication apparatus and that has a corresponding function. This is not limited in embodiments of this application. The following uses the first communication apparatus/the third communication apparatus as an example for description. The paging method 300 is performed by the first communication apparatus and the third communication apparatus. The third communication apparatus may be a network device 110.

It may be understood that, in the paging method 300, the first communication apparatus may be a terminal device 120, and a second communication apparatus may be a network device 130. Alternatively, the first communication apparatus may be a network device 130, and a second communication apparatus may be a terminal device 120. Therefore, the paging method 300 is not only applicable to a scenario in which the first communication apparatus is the terminal device 120 and the second communication apparatus is the network device 130, but also applicable to a scenario in which the first communication apparatus is the network device 130 and the second communication apparatus is the terminal device 120. For ease of description, in embodiments of this application, an example in which the first communication apparatus is the terminal device 120 is used for description, but a scenario in which the first communication apparatus is the network device 130 is not limited. As shown in FIG. 3, the paging method 300 includes the following steps.

S310: The third communication apparatus sends paging information #A to the first communication apparatus, where the paging information #A includes first indication information indicating the first communication apparatus and the second communication apparatus.

Correspondingly, the first communication apparatus receives the paging information #A from the third communication apparatus.

Specifically, the paging information #A sent by the third communication apparatus to the first communication apparatus includes the first indication information, and the first indication information indicates the first communication apparatus and the second communication apparatus.

In a possible implementation, when the first communication apparatus is the terminal device 120, the second communication apparatus is the network device 130, and the second communication apparatus can be configured to provide a service for the first communication apparatus. For example, the second communication apparatus provides a data transmission service for the first communication apparatus, or the second communication apparatus provides a data forwarding service for the first communication apparatus.

In addition, that the second communication apparatus is configured to provide the service for the first communication apparatus may be understood as that the second communication apparatus is an associated communication apparatus of the first communication apparatus, that is, the first communication apparatus and the second communication apparatus are associated with each other.

An association relationship between the second communication apparatus and the first communication apparatus may be configured by a core network, or may be configured by the third communication apparatus, or may be formed based on historical camping information of the first communication apparatus or by exchanging respective associated first communication apparatuses between second communication apparatuses.

When the second communication apparatus provides the service for the first communication apparatus, the second communication apparatus may be referred to as a serving node, where the serving node may be any one of a base station, a cell, a TRP, an RIS node, an IAB node, and a relay (Relay) node.

The first indication information included in the paging information #A can indicate, to the first communication apparatus, that the paging information #A is related to the first communication apparatus. After receiving the paging information related to the first communication apparatus, the first communication apparatus may perform one or more of the following operations: responding to the paging information #A, resuming an RRC connection, reestablishing the RRC connection, or the like.

In addition, the first indication information included in the paging information #A can further indicate, to the second communication apparatus, that the paging information #A is related to the second communication apparatus. After receiving the paging information related to the second communication apparatus, the second communication apparatus may perform one or more of the following operations: switching to a wake-up state, responding to the paging information #A, providing the data transmission service for the first communication apparatus, or the like.

In conclusion, the paging information #A sent by the third communication apparatus to the first communication apparatus may not only be used to page the first communication apparatus, but also be used to page the second communication apparatus. The third communication apparatus may page both the first communication apparatus and the second communication apparatus by broadcasting the paging information #A. In other words, the third communication apparatus sends the paging information #A to the first communication apparatus and the second communication apparatus. Specifically, the third communication apparatus may further send the paging information #A to the second communication apparatus. The third communication apparatus may simultaneously send the paging information #A to the first communication apparatus and the second communication apparatus through broadcasting.

In a possible implementation, the first indication information includes a first identifier and a second identifier. The first identifier may be a device identifier (for example, UE ID) of the first communication apparatus, and indicates the first communication apparatus. The second identifier may be a device identifier of the second communication apparatus, a cell identifier (for example, CELL_ID), a node identifier configured by a network (for example, an identifier configured by the third communication apparatus for the second communication apparatus when a link is established between the second communication apparatus and the third communication apparatus), or the like, and indicates the second communication apparatus.

Specifically, the paging information carries the first identifier and the second identifier, so that when receiving the paging information, the first communication apparatus can determine, based on the first identifier, that the paging information is related to the first communication apparatus. Correspondingly, when receiving the paging information, the second communication apparatus can determine, based on the second identifier, that the paging information is related to the second communication apparatus. In this way, in this application, both the terminal device and the network device that can provide the service for the terminal device can be paged, thereby reducing an overall delay.

Optionally, when the first indication information in the paging information #A includes the first identifier and the second identifier, it may be understood as that the paging information #A includes the first identifier and the second identifier.

In a possible implementation, the paging information #A may include an identifier list, and the identifier list includes a plurality of identifiers. Further, the identifier list may include an identifier list of the first communication apparatus and an identifier list of the second communication apparatus. Specifically, the identifier list of the first communication apparatus includes a plurality of identifiers respectively indicating different first communication apparatuses. The identifier list of the second communication apparatus includes a plurality of identifiers respectively indicating different second communication apparatuses.

In a possible implementation, the first indication information includes a first identifier list and a second identifier list. Each first identifier in the first identifier list indicates one first communication apparatus, and each second identifier in the second identifier list indicates one second communication apparatus.

Optionally, one first identifier is associated with a plurality of second identifiers, that is, one first communication apparatus is associated with one or more second communication apparatuses. In this way, both a plurality of first communication apparatuses and a plurality of second communication apparatuses can be woken up.

In a possible implementation, the first indication information includes an index (index), and the index is associated with the first communication apparatus and the second communication apparatus. For example, the index is associated with an identifier (for example, the first identifier) of the first communication apparatus and an identifier (for example, the second identifier) of the second communication apparatus.

The index may be considered as a connection relationship established by the third communication apparatus between the first communication apparatus and the second communication apparatus. The third communication apparatus presents the association relationship between the first communication apparatus and the second communication apparatus in a form of the index, and the association relationship between the first communication apparatus and the second communication apparatus may be configured in a manner of being predefined in a protocol.

For example, an index #a is associated with an identifier #a1 and an identifier #b1, an index #b is associated with an identifier #a2 and an identifier #b2, and an index #c is associated with an identifier #a3 and an identifier #b3. The first communication apparatus may determine, based on the received index #a and the identifier #a1 of the first communication apparatus, that the paging information #A is related to the first communication apparatus. The second communication apparatus may determine, based on the received index #a and the identifier #b1 of the second communication apparatus, that the paging information #A is related to the second communication apparatus. In this way, in embodiments of this application, signaling overheads can be reduced by using the index.

Optionally, the form of the index may include the identifier of the first communication apparatus or the identifier of the second communication apparatus. To be specific, the paging message #A includes the identifier of the first communication apparatus or the identifier of the second communication apparatus, the identifier of the first communication apparatus is associated with the identifier of the second communication apparatus, and the association relationship may be predefined in a protocol or preconfigured. After receiving the paging message #A, the first communication apparatus or the second communication apparatus may determine, based on the identifier of the first communication apparatus or the identifier of the second communication apparatus and the association relationship, whether the paging information #A is related to the first communication apparatus or the second communication apparatus.

Further, the paging information #A may include an index list, and the index list includes a plurality of indexes, for example, includes the index #a, the index #b, and the index #c.

Optionally, a specific form of the index is not limited in embodiments of this application.

In embodiments of this application, signaling overheads for paging both the first communication apparatus and the second communication apparatus can be reduced by using the index associated with the first communication apparatus and the second communication apparatus.

Optionally, the association relationship between the first communication apparatus and the second communication apparatus may be determined in a manner in which the third communication apparatus indicates to the first communication apparatus and the second communication apparatus.

For example, when the first communication apparatus accesses the third communication apparatus, the third communication apparatus indicates, to the first communication apparatus, an index value corresponding to the association relationship between the first communication apparatus and the second communication apparatus. Alternatively, when the first communication apparatus enters an RRC_IDLE state, the third communication apparatus indicates, to the first communication apparatus, an index value corresponding to the association relationship between the first communication apparatus and the second communication apparatus.

**In** a possible implementation, the first indication information includes the index and the first identifier. **In** this way, the first communication apparatus may determine, based on the first identifier, that the paging information #A is related to the first communication apparatus. The second communication apparatus may also determine, based on the first identifier and the index, that the paging information #A is related to the second communication apparatus.

S320: The first communication apparatus establishes a connection to the second communication apparatus or the third communication apparatus based on the paging information #A.

Specifically, when the first communication apparatus is the terminal device 120, and the second communication apparatus is the network device 130, the first communication apparatus may determine, based on the first indication information in the paging information #A, that the paging information #A is related to the first communication apparatus. Therefore, the first communication apparatus may respond to the paging information #A. For example, the first communication apparatus resumes an RRC connection to the third communication apparatus, or the first communication apparatus reestablishes the RRC connection to the third communication apparatus. For another example, the first communication apparatus establishes an air interface connection to the second communication apparatus.

That the first communication apparatus establishes a connection to the second communication apparatus or the third communication apparatus based on the paging information may include: The first communication apparatus establishes a first connection based on the paging information, where the first connection may be a connection between the first communication apparatus and the second communication apparatus, or may be a connection between the first communication apparatus and the third communication apparatus. Unified descriptions are provided herein, and details are not described below.

In conclusion, the first communication apparatus may establish a connection to the second communication apparatus or the third communication apparatus based on the paging information #A.

The paging information carries indication information indicating the first communication apparatus and the second communication apparatus associated with the first communication apparatus, so that the third communication apparatus can wake up both the first communication apparatus and the second communication apparatus. In this way, an overall delay can be reduced, and paging overheads can be further reduced.

In some possible implementations, the third communication apparatus can obtain location information of the first communication apparatus (the terminal device). For example, a location of the first communication apparatus (the terminal device) is fixed. For example, the third communication apparatus may obtain the location information of the first communication apparatus (the terminal device) through artificial intelligence, sensing, or the like, and can make, based on the location information, inference on one or more second communication apparatuses that may be associated with the first communication apparatus (the terminal device).

In some possible implementations, due to mobility of the first communication apparatus (the terminal device), the third communication apparatus may not be able to obtain specific location information of the first communication apparatus (the terminal device) in real time, but may make, based on obtained historical location information, a moving route, and the like of the first communication apparatus (the terminal device), inference on one or more second communication apparatuses that may be associated with the first communication apparatus (the terminal device).

In a possible implementation, the third communication apparatus includes identifiers of a plurality of second communication apparatuses associated with the first communication apparatus in the paging information #A, to wake up both the first communication apparatus and the plurality of second communication apparatuses associated with the first communication apparatus.

There may be one or more second communication apparatuses associated with the first communication apparatus. When the plurality of second communication apparatuses are related, the first indication information can indicate the plurality of second communication apparatuses.

In a possible implementation:

A transmission resource on which the third communication apparatus sends the paging information #A to the first communication apparatus is the same as a transmission resource on which the third communication apparatus sends the paging information #A to the second communication apparatus.

For example, the first communication apparatus and the second communication apparatus monitor the paging information #A on a same transmission resource. In other words, the first communication apparatus and the second communication apparatus share same paging configuration information. In this way, the third communication apparatus may wake up both the first communication apparatus and the second communication apparatus by using the same paging configuration information, thereby reducing signaling overheads.

In a possible implementation:

A transmission resource on which the third communication apparatus sends the paging information #A to the first communication apparatus is different from a transmission resource on which the third communication apparatus sends the paging information #A to the second communication apparatus.

For example, the third communication apparatus may broadcast a plurality of pieces of paging configuration information, where the plurality of pieces of paging configuration information are used to separately page the first communication apparatus and the second communication apparatus, so that the first communication apparatus and the second communication apparatus can be supported in monitoring the paging information on different transmission resources. In this way, in embodiments of this application, the first communication apparatus and the second communication apparatus can be supported in monitoring the paging information #A on different transmission resources.

In a possible implementation, the paging information #A may further include beam information for communication between the first communication apparatus and the second communication apparatus.

For example, information about a transmit beam and/or a receive beam of the first communication apparatus may be configured in the paging information #A. For example, notification or indication may be performed by using a synchronization signal and physical broadcast channel block (synchronization signal and physical broadcast channel block, SSB), a precoding matrix indication (precoding matrix indication, PMI), or another form.

For example, an example in which the information about the transmit beam is configured is used for description. For example, the SSB has eight indexes, and each index corresponds to a different beam. The paging information #A may include a specific SSB index, and the first communication apparatus can determine the transmit beam based on the specific SSB index included in the paging information #A.

In this way, in embodiments of this application, the beam information for communication between the first communication apparatus and the second communication apparatus may be indicated, so that beam alignment can be quickly implemented between the first communication apparatus and the second communication apparatus, thereby reducing an access delay.

It may be understood that, the paging method 300 is also applicable to a scenario in which the first communication apparatus is the network device 130 and the second communication apparatus is the terminal device 120. For specific descriptions, refer to the foregoing content. Details are not described herein again.

It should be noted that, when the first communication apparatus is the network device 130, and the second communication apparatus is the terminal device 120, the first communication apparatus may determine, based on the first indication information in the paging information #A, that the paging information #A is related to the first communication apparatus. Therefore, the first communication apparatus may respond to the paging information #A. For example, the first communication apparatus establishes inter-station interface transmission (for example, Xn interface transmission) with the third communication apparatus. For another example, the first communication apparatus establishes an air interface connection to the second communication apparatus.

The following describes a paging method 400 in embodiments of this application with reference to FIG. 4.

FIG. 4 is an interaction flowchart of a paging method 400 according to an embodiment of this application. A method procedure in FIG. 4 may be performed by a first communication apparatus/a third communication apparatus, or may be performed by a module and/or a component (for example, a chip or an integrated circuit) that is installed in the first communication apparatus/the third communication apparatus and that has a corresponding function. This is not limited in embodiments of this application. The following uses the first communication apparatus/the third communication apparatus as an example for description. The paging method 400 is performed by the first communication apparatus and the third communication apparatus. The first communication apparatus may be a terminal device 120, and the third communication apparatus may be a network device 110. As shown in FIG. 4, the paging method 400 includes the following steps.

S410: The third communication apparatus sends second indication information to the first communication apparatus, where the second indication information indicates at least one control resource set (core resource set, CORESET).

Correspondingly, the first communication apparatus receives the second indication information from the third communication apparatus, and determines, based on the second indication information, the at least one CORESET indicated by the third communication apparatus.

Specifically, each of the at least one CORESET can indicate a resource for receiving DCI by the first communication apparatus. That is, each CORESET is used to receive the DCI.

Optionally, the DCI is scrambled by using a P-RNTI. In embodiments of this application, the P-RNTI is used as an example for description.

Optionally, the DCI may alternatively be scrambled by using another identifier. This is not limited in embodiments of this application.

Specifically, a transmission resource on which the first communication apparatus receives DCI carried on a PDCCH is mainly determined based on the CORESET and a search space (search space, SS). The CORESET indicates information such as frequency domain resource information of the PDCCH and quantity information of OFDM symbols occupied by a time domain resource. The search space indicates information such as a start OFDM symbol and a monitoring cycle, and an associated CORESET of the PDCCH. The first communication apparatus may determine, based on the CORESET and the SS, the transmission resource for receiving the DCI scrambled by using the P-RNTI.

Generally, the third communication apparatus may configure, in a PDCCH common field of a system message, a search space identifier indicating the SS used by the first communication apparatus. If no search space identifier is configured in the PDCCH common, the first communication apparatus may use a default Type 0-PDCCH resource, and the resource may be a PDCCH resource used to schedule system information block 1 (system information block 1, SIB 1).

For an SS associated with paging, the third communication apparatus usually configures a CORESET associated with the paging, and the first communication apparatus detects, on the CORESET, the DCI scrambled by using the P-RNTI. If the third communication apparatus does not configure the CORESET associated with the paging, the first communication apparatus may detect, in a CORESET #0 (a default CORESET), the DCI scrambled by using the P-RNTI.

When the first communication apparatus retrieves, only in a common search space (common search space, CSS) in the CORESET, the DCI scrambled by using the P-RNTI, because the CSS in the CORESET is limited, when a plurality of first communication apparatuses retrieve, in the CSS, the DCI scrambled by using the P-RNTI, a plurality of pieces of paging information related to the first communication apparatus are not sent in time. Therefore, the third communication apparatus may send, to the first communication apparatus, the second indication information indicating the at least one CORESET, and the first communication apparatus may select a proper CORESET from the at least one CORESET.

S420: The first communication apparatus determines a CORESET #A in the at least one CORESET based on a parameter of the first communication apparatus.

Specifically, the parameter of the first communication apparatus may include at least one of the following: a group identifier, a beam index, a device identifier, and the like. Each of the foregoing listed parameters has an association relationship with the CORESET #A indicated by the third communication apparatus.

In a possible implementation, the association relationship between the parameter of the first communication apparatus and the CORESET #A is predefined in a protocol; or the association relationship between the parameter of the first communication apparatus and the CORESET #A is indicated. For example, the third communication apparatus indicates, to the first communication apparatus, the association relationship between the parameter of the first communication apparatus and the CORESET #A.

For example, when the first communication apparatus accesses a network, the third communication apparatus indicates, to the first communication apparatus, the association relationship between the parameter of the first communication apparatus and the CORESET #A.

In embodiments of this application, the association relationship between the parameter of the first communication apparatus and the first control resource set can be more flexibly indicated to the first communication apparatus through indication. In embodiments of this application, notification overheads can be reduced in a manner of being predefined in a protocol.

Optionally, the association relationship between the parameter of the first communication apparatus and the CORESET #A may be indicated by the third communication apparatus, or may be notified by the first communication apparatus and the third communication apparatus in a previous communication process.

The following describes an example of the association relationship between the parameter of the first communication apparatus and the CORESET #A,

for example, an association relationship #1 between the group identifier and the CORESET.

When the parameter of the first communication apparatus includes the group identifier, the third communication apparatus (or a core network) may group a plurality of first communication apparatuses into a same group, and configure one group identifier for each group. For example, a group identifier of a first group is #U, and a group identifier of a second group is #Y. Each group includes the plurality of first communication apparatuses.

The third communication apparatus may configure that a first communication apparatus corresponding to the group identifier #U corresponds to a CORESET #1, and a first communication apparatus corresponding to the group identifier #Y corresponds to a CORESET #2. In this way, the first communication apparatus determines a corresponding CORESET through a group identifier to which the first communication apparatus belongs, to avoid simultaneously performing blind detection on a plurality of CORESETs, so as to reduce complexity of the first communication apparatus.

For example, for the association relationship between the group identifier and the CORESET, refer to Table 2.

Table 2

| Group identifier | CORESET |
|---|---|
| #U | CORESET #1 |
| #Y | CORESET #2 |
| #P | CORESET #3 |
| #K | CORESET #4 |
| ... | ... |

In Table 2, a first communication apparatus whose group identifier is #U selects a CORESET #1, a first communication apparatus whose group identifier is #Y selects a CORESET #2, a first communication apparatus whose group identifier is #P selects a CORESET #3, and a first communication apparatus whose group identifier is #K selects a CORESET #4.

Optionally, the third communication apparatus may send the content in Table 2 to the first communication apparatus in a form of configuration information. In this way, the first communication apparatus may determine a corresponding CORESET based on the second indication information sent by the third communication apparatus and the group identifier of the first communication apparatus (when the content shown in Table 2 is predefined in a protocol), to avoid simultaneously performing blind detection on the plurality of CORESETs, so as to reduce complexity of the first communication apparatus.

Optionally, the first communication apparatus may further determine a corresponding CORESET based on the second indication information sent by the third communication apparatus, the content shown in Table 2, and the group identifier of the first communication apparatus, to avoid simultaneously performing blind detection on the plurality of CORESETs, so as to reduce the complexity of the first communication apparatus.

In S410, the at least one CORESET indicated by the second indication information sent by the third communication apparatus to the first communication apparatus may be some or all CORESETs shown in Table 2. This is not limited in embodiments of this application.

It may be understood that, the foregoing grouping may be completed by the core network, or may be completed by the third communication apparatus. If the foregoing grouping is completed by the core network, the core network sends information about the first communication apparatus and information about the group identifier corresponding to the first communication apparatus to the first communication apparatus and the third communication apparatus. If the foregoing grouping is completed by the third communication apparatus, the third communication apparatus indicates, to the first communication apparatus, the group identifier corresponding to the first communication apparatus, for example, in a manner of broadcasting by using system information, or in a manner of notifying by using RRC signaling when the first communication apparatus is in a connected state.

Optionally, the content shown in Table 2 may be configured in a manner of being predefined in a protocol.

For example, an association relationship #2 between a device identifier and the CORESET is as follows.

When the parameter of the first communication apparatus includes the device identifier, an association relationship between a device identifier of the first communication apparatus and the CORESET may be predefined in a protocol, or may be configured by the third communication apparatus. For example, the third communication apparatus configures a plurality of CORESETs, and the first communication apparatus may determine a corresponding CORESET based on the device identifier of the first communication apparatus.

In embodiments of this application, the association relationship between the parameter of the first communication apparatus and the first control resource set can be more flexibly indicated to the first communication apparatus through indication. In embodiments of this application, notification overheads can be reduced in a manner of being predefined in a protocol.

For example, the third communication apparatus numbers the plurality of configured CORESETs, for example, the plurality of configured CORESETs are numbered from 0 to N-1, where N is a quantity of CORESETs configured by the third communication apparatus, and an index of a CORESET that needs to be detected by the first communication apparatus is equal to UE_ID mod N, where mod represents a modulo operation. In this way, the first communication apparatus determines a corresponding CORESET based on the device identifier of the first communication apparatus, to avoid simultaneously performing blind detection on the plurality of CORESETs, so as to reduce the complexity of the first communication apparatus.

For example, for the association relationship between the device identifier and the CORESET, refer to Table 3.

Table 3

| Device identifier (UE_ID mod N) | CORESET |
|---|---|
| 0 | CORESET #0 |
| 1 | CORESET #1 |
| 2 | CORESET #2 |
| ... | |
| N-1 | CORESET #N-1 |

In Table 3, a first communication apparatus whose UE_ID mod N is 0 selects a CORESET #0, a first communication apparatus whose UE_ID mod N is 1 selects a CORESET #1, a first communication apparatus whose UE_ID mod N is 2 selects a CORESET #2, and a first communication apparatus whose UE_ID mod N is N-1 selects a CORESET #N-1.

Optionally, the third communication apparatus may send the content in Table 3 to the first communication apparatus in a form of configuration information. In this way, the first communication apparatus may determine a corresponding CORESET based on the second indication information sent by the third communication apparatus and the device identifier of the first communication apparatus, to avoid simultaneously performing blind detection on the plurality of CORESETs, so as to reduce the complexity of the first communication apparatus.

Optionally, the content shown in Table 3 may be configured in a manner of being predefined in a protocol.

In S410, the at least one CORESET indicated by the second indication information sent by the third communication apparatus to the first communication apparatus may be some or all CORESETs shown in Table 3. This is not limited in embodiments of this application.

For example, an association relationship #3 between a beam index and the CORESET is as follows.

When the parameter of the first communication apparatus includes the beam index, the third communication apparatus may configure an association relationship between a beam index of the first communication apparatus and the CORESET. For example, the third communication apparatus configures a plurality of CORESETs, and indicates an association relationship between the beam index of the first communication apparatus and the plurality of CORESETs.

For example, each beam index may be associated with one CORESET. For example, there are four beam indexes in total, where a beam index 0 is associated with a CORESET 0, a beam index 1 is associated with a CORESET 1, a beam index 2 is associated with a CORESET 2, and a beam index 3 is associated with a CORESET 3. In this way, the first communication apparatus may determine a corresponding CORESET under a corresponding beam index, to avoid simultaneously performing blind detection on the plurality of CORESETs, so as to reduce the complexity of the first communication apparatus.

For example, for the association relationship between the beam index and the CORESET, refer to Table 4.

Table 4

| Beam index | CORESET |
|---|---|
| 1 | CORESET #1 |
| 2 | CORESET #2 |
| 3 | CORESET #3 |
| ... | ... |

In Table 4, the first communication apparatus whose beam index is 1 selects a CORESET #1, the first communication apparatus whose beam index is 2 selects a CORESET #2, and the first communication apparatus whose beam index is 3 selects a CORESET #3.

Optionally, the third communication apparatus may send the content in Table 4 to the first communication apparatus. In this way, the first communication apparatus may determine a corresponding CORESET based on the second indication information sent by the third communication apparatus and the beam index corresponding to the first communication apparatus, to avoid simultaneously performing blind detection on the plurality of CORESETs, so as to reduce the complexity of the first communication apparatus.

Optionally, the content shown in Table 4 may be configured in a manner of being predefined in a protocol.

In S410, the at least one CORESET indicated by the second indication information sent by the third communication apparatus to the first communication apparatus may be some or all CORESETs shown in Table 4. This is not limited in embodiments of this application.

When the parameter of the first communication apparatus includes the beam index, the first communication apparatus may determine the corresponding CORESET based on a synchronization signal block beam of the first communication apparatus. In addition, a neighboring synchronization signal block beam may be associated with a different control resource set (for example, at a different frequency domain location), thereby reducing interference.

In a possible implementation, one beam is used to send one SSB, that is, one beam corresponds to one SSB. Therefore, the beam index may be in one-to-one correspondence with an SSB index. The parameter of the first communication apparatus may further include the SSB index.

For example, each SSB index may be associated with one CORESET. For example, there are four SSB indexes in total. An SSB index 0 is associated with the CORESET 0, an SSB index 1 is associated with the CORESET 1, an SSB index 2 is associated with the CORESET 2, and an SSB index 3 is associated with the CORESET 3. In this way, the first communication apparatus may determine a corresponding CORESET under a corresponding SSB index, to avoid simultaneously performing blind detection on the plurality of CORESETs, so as to reduce the complexity of the first communication apparatus.

For example, for the association relationship between the SSB index and the CORESET, refer to Table 5.

Table 5

| SSB index | CORESET |
|---|---|
| 1 | CORESET #1 |
| 2 | CORESET #2 |
| 3 | CORESET #3 |
| ... | ... |

In Table 5, a first communication apparatus whose SSB index is 1 selects a CORESET #1, a first communication apparatus whose SSB index is 2 selects a CORESET #2, and a first communication apparatus whose SSB index is 3 selects a CORESET #3.

Optionally, the third communication apparatus may send the content in Table 5 to the first communication apparatus. In this way, the first communication apparatus may determine a corresponding CORESET based on the second indication information sent by the third communication apparatus and the SSB index corresponding to the first communication apparatus, to avoid simultaneously performing blind detection on the plurality of CORESETs, so as to reduce the complexity of the first communication apparatus.

Optionally, the content shown in Table 5 may be configured in a manner of being predefined in a protocol.

In S410, the at least one CORESET indicated by the second indication information sent by the third communication apparatus to the first communication apparatus may be some or all CORESETs shown in Table 5. This is not limited in embodiments of this application.

For example, an association relationship #4 between an SSB index (which may also be a beam index), a device identifier, and the CORESET is as follows.

When the parameter of the first communication apparatus includes the SSB index and the device identifier, the third communication apparatus may configure the association relationship between the device identifier of the first communication apparatus, the SSB index, and the CORESET.

For example, each SSB index is associated with the plurality of CORESETs. Because each SSB beam is associated with the plurality of CORESETs, the third communication apparatus may determine, based on the device identifier of the first communication apparatus, a CORESET that needs to be detected by the first communication apparatus. For example, the third communication apparatus may number the CORESETs associated with each SSB index, where the CORESETs are numbered from 0 to N-1, N is a quantity of CORESETs associated with each SSB index, and a CORESET index that needs to be detected by the first communication apparatus is equal to UE ID mod N.

For example, there are four SSB indexes in total. An SSB index 0 is associated with a CORESET 0 and a CORESET 1, an SSB index 1 is associated with a CORESET 2 and a CORESET 3, an SSB index 2 is associated with the CORESET 0 and the CORESET 1, and an SSB index 3 is associated with the CORESET 2 and the CORESET 3. For the first communication apparatus under the SSB index 3, the first communication apparatus determines, by obtaining the second indication information, that the beam is associated with the CORESET 2 and the CORESET 3, the first communication apparatus may first renumber the CORESET 2 and the CORESET 3 as the CORESET 0 and the CORESET 1, and then, determine the corresponding CORESET based on a case in which the foregoing formula CORESET index is equal to UE ID mod 2. For example, if the UE ID of the first communication apparatus is equal to 15, the CORESET index is equal to UE ID mod 2 and is equal to 1, and an index 1 corresponds to the CORESET 3, the first communication apparatus monitors, on the CORESET 3, DCI scrambled by using a P-RNTI.

In this way, the first communication apparatus may determine a corresponding CORESET under a corresponding SSB index and the device identifier, to avoid simultaneously performing blind detection on the plurality of CORESETs, so as to reduce the complexity of the first communication apparatus.

For example, an association relationship #5 between a status type and the CORESET is as follows.

When the parameter of the first communication apparatus includes the status type, the third communication apparatus may configure the association relationship between the status type of the first communication apparatus and the CORESET.

For example, two CORESETs may be configured for the third communication apparatus. One CORESET is used for the first communication apparatus in an idle state, and the other CORESET is used for the first communication apparatus in a third state (inactive). The third state may also be referred to as an inactive state. The first communication apparatus may determine a proper CORESET based on the status type of the first communication apparatus, to avoid simultaneously performing blind detection on the plurality of CORESETs, so as to reduce the complexity of the first communication apparatus.

For example, for the association relationship between the status type and the CORESET, refer to Table 6.

Table 6

| Status type | CORESET |
|---|---|
| Idle state | CORESET #1 |
| Third state | CORESET #2 |

In Table 6, a first communication apparatus whose status type is the idle state selects the CORESET #1, and a first communication apparatus whose status type is the third state selects the CORESET #2.

Optionally, the third communication apparatus may send the content in Table 6 to the first communication apparatus. In this way, the first communication apparatus may determine a corresponding CORESET based on the second indication information sent by the third communication apparatus and the status type of the first communication apparatus, to avoid simultaneously performing blind detection on the plurality of CORESETs, so as to reduce the complexity of the first communication apparatus.

Optionally, the content shown in Table 6 may be configured in a manner of being predefined in a protocol.

In S410, the at least one CORESET indicated by the second indication information sent by the third communication apparatus to the first communication apparatus may be some or all CORESETs shown in Table 6. This is not limited in embodiments of this application.

A plurality of control resource sets used to receive the downlink control information are indicated to the first communication apparatus, so that the first communication apparatus can select a proper control resource set based on the parameter. In this way, blind detection can be avoided being simultaneously performed on the plurality of CORESETs, and complexity of the first communication apparatus can be further reduced.

In other words, in embodiments of this application, the plurality of CORESETs used to monitor the DCI are configured, so that a problem that control channel resources used to monitor the DCI are insufficient can be resolved, to increase a paging capacity.

The first communication apparatus may determine a corresponding CORESET under a corresponding parameter, to avoid simultaneously performing blind detection on the plurality of CORESETs, so as to reduce the complexity of the first communication apparatus. In addition, the plurality of CORESETs used to monitor the DCI are configured, so that a frequency diversity gain can be improved in embodiments of this application.

It may be understood that, the first communication apparatus may determine a proper control resource set based on the foregoing parameter. In this way, complexity of determining a corresponding control resource set by the first communication apparatus can be reduced.

For example, when the parameter of the first communication apparatus includes the beam index, the first communication apparatus may directly determine the corresponding control resource set based on a synchronization signal block beam index of the first communication apparatus. In addition, a neighboring synchronization signal block beam index may be associated with a different control resource set (for example, at a different frequency domain location), thereby reducing interference.

Optionally, in addition to a transmission resource for receiving the paging information, the DCI may further indicate at least one of the following:

a system message change, earthquake and tsunami warning system (earthquake and tsunami warning system, ETWS) information, a commercial mobile alert system (commercial mobile alert system, CMAS) message, a notification of stopping paging detection, or the like.

In a possible implementation:

When the DCI indicates the transmission resource for receiving the paging information, the paging method 400 may be combined with the paging method 300 to form a new paging method. For details, refer to the descriptions in the summary.

For example, the paging method 300 shown in FIG. 3 relates to how to wake up both the first communication apparatus and the second communication apparatus. The paging method 400 shown in FIG. 4 relates to how to indicate, to the first communication apparatus, a control resource set used to receive the DCI. Before performing the paging method 300, the third communication apparatus may first perform the paging method 400. The first communication apparatus may determine, based on the second indication information sent by the third communication apparatus, the control resource set used to receive the DCI, and then determine, based on the DCI, a resource for receiving the paging information #A.

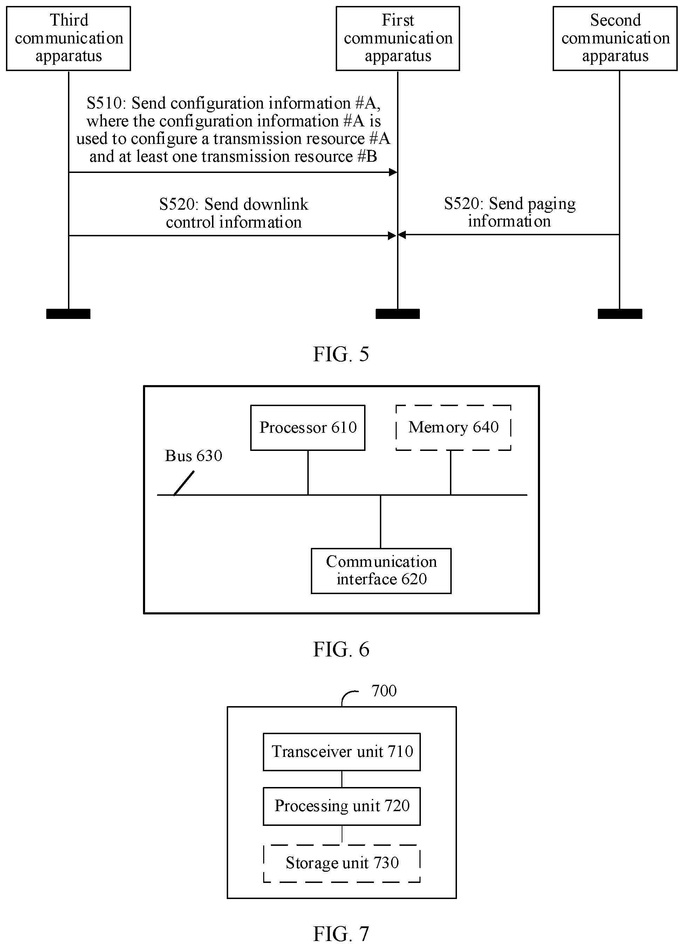

The following describes a paging method 500 in embodiments of this application with reference to FIG. 5.

FIG. 5 is an interaction flowchart of a paging method 500 according to an embodiment of this application. A method procedure in FIG. 5 may be performed by a first communication apparatus/a third communication apparatus, or may be performed by a module and/or a component (for example, a chip or an integrated circuit) that is installed in the first communication apparatus/the third communication apparatus and that has a corresponding function. This is not limited in embodiments of this application. The following uses the first communication apparatus/the third communication apparatus as an example for description. The paging method 500 is performed by the first communication apparatus and the third communication apparatus. The first communication apparatus may be a terminal device 120, and the third communication apparatus may be a network device 110. As shown in FIG. 5, the paging method 500 includes the following steps.

S510: The third communication apparatus sends configuration information #A to the first communication apparatus, where the configuration information #A is used to configure a transmission resource #A and at least one transmission resource #B.

Correspondingly, the first communication apparatus receives the configuration information #A from the third communication apparatus.

Specifically, the first communication apparatus separately receives downlink control information and paging information from different communication apparatuses based on the configuration information sent by the third communication apparatus. In this way, in embodiments of this application, the first communication apparatus can receive the paging information on a transmission resource different from a transmission resource for receiving the downlink control information, thereby resolving an existing problem that physical downlink shared channel resources for sending the paging information are insufficient.

Specifically, the first communication apparatus may receive the paging information based on a second transmission resource, and the downlink control information received based on a first transmission resource indicates to receive the paging information. In this way, an existing limitation that a resource for receiving the paging information cannot exceed a size of a control resource set #0 can be overcome, and a transmission resource for transmitting the paging information is further increased.

For example, the transmission resource #A and the transmission resource #B that are configured by using the configuration information #A respectively indicate a PDCCH resource and a PDSCH resource. The PDCCH resource is used by the first communication apparatus to receive DCI, and the DCI indicates to receive paging information #B. The PDSCH resource is used by the first communication apparatus to receive the paging information #B. For ease of description, in embodiments of this application, an example in which the PDCCH resource is the transmission resource #A and the PDSCH resource is the transmission resource #B is used for description.

In a possible implementation, the configuration information #A includes at least one of the following:
a cell identifier corresponding to the PDSCH resource, a start location and a size of the PDSCH resource, a resource number of the PDSCH resource, or a carrier number of the PDSCH resource.

Specifically, the resource number of the PDSCH resource is a location or a number of a PDSCH in a plurality of PDSCH resources when a carrier that is used to receive the paging information #B and on which the PDSCH is located includes the plurality of PDSCH resources. The carrier number of the PDSCH resource is a location or a number of a carrier on which a PDSCH resource is located in a plurality of carriers when the first communication apparatus may receive the paging information #B on the plurality of carriers and each carrier supports the PDSCH resource.

The first communication apparatus may determine a proper PDSCH resource based on indicated related information of the PDSCH resource, and receive the paging information based on the PDSCH resource. In this way, an existing limitation that a resource for receiving the paging information cannot exceed a size of a control resource set #0 can be overcome, and a transmission resource for transmitting the paging information is further increased.

An existing mechanism may be reused for configuration of the PDCCH resource. For example, the configuration of the PDCCH resource mainly includes a CORESET configuration and a search space configuration. Specifically, the CORESET configuration indicates a frequency domain resource occupied by a CORESET, a time domain symbol, whether interleaving is performed, and the like. The search space configuration indicates a cycle, a slot, an offset, and the like, and is used to determine a slot for retrieval. The existing mechanism may continue to be used for these cases.

The first communication apparatus may determine more detailed information of the second transmission resource based on the foregoing information, so that the first communication apparatus receives the paging information on the second transmission resource.

It may be understood that, if a large quantity of PDSCH resources can be configured in a cell, a quantity of bits occupied by a field that is of indication information newly sent by the third communication apparatus to the first communication apparatus and that indicates a resource number of the PDSCH resource may be determined based on a total quantity of PDSCH resources.

S520: The first communication apparatus receives downlink control information from the third communication apparatus and paging information #B from a second communication apparatus based on the configuration information #A.

Specifically, the first communication apparatus may separately receive the DCI and the paging information #B based on the configuration information #A. The DCI is from the third communication apparatus, and the paging information #B is from the second communication apparatus.

The DCI received by the first communication apparatus may be sent by the third communication apparatus, and the paging information #B received by the first communication apparatus may be sent by the second communication apparatus. That is, the third communication apparatus sends the DCI to the first communication apparatus, indicating that the DCI is a paging indication, and the second communication apparatus sends the paging information #B to the first communication apparatus. In this way, in embodiments of this application, a capacity of the PDSCH resource or a quantity of PDSCH resources carrying the paging information can be increased.

Specifically, the first communication apparatus separately receives the DCI and the paging information #B from different communication apparatuses based on the configuration information sent by the third communication apparatus. In this way, in embodiments of this application, the first communication apparatus can receive the paging information #B on a transmission resource different from a transmission resource for receiving the DCI, thereby resolving an existing problem that PDSCH resources for sending the paging information are insufficient.

Specifically, the first communication apparatus may receive the paging information #B based on the second transmission resource, and the DCI received based on the first transmission resource indicates to receive the paging information #B. In this way, an existing limitation that a resource for receiving the paging information cannot exceed a size of a CORESET #0 can be overcome, and a transmission resource for transmitting the paging information is further increased.

In a possible implementation, a carrier corresponding to the PDCCH resource is different from a carrier corresponding to the PDSCH resource. In this way, cross-carrier scheduling of the paging information can be supported.

In a possible implementation, the first communication apparatus receives third indication information from the third communication apparatus, where the third indication information indicates whether quasi co-location (quasi co-location, QCL) of the PDCCH resource is the same as QCL of the PDSCH resource.

In this way, when determining, based on the third indication information, that the QCL of the PDCCH resource is different from the QCL of the PDSCH resource, the first communication apparatus may determine that the carrier corresponding to the PDCCH resource is different from the carrier corresponding to the PDSCH resource.

Specifically, the first communication apparatus may determine, depending on whether the QCL of the first transmission resource and the QCL of the second transmission resource that are indicated by the third indication information are the same, whether QCL information for receiving the DCI can be reused when the paging information is received. For example, if the QCL of the first transmission resource and the QCL of the second transmission resource that are indicated by the third indication information are the same, the quasi co-location information for receiving the downlink control information may be reused; or if the QCL of the first transmission resource and the QCL of the second transmission resource that are indicated by the third indication information are different, the quasi co-location information for receiving the downlink control information is not reused.

Optionally, the first communication apparatus may receive the paging information #B and the DCI from the third communication apparatus, or may receive the paging information #B from the third communication apparatus and the DCI from the second communication apparatus. For the latter, a beam used by the first communication apparatus to receive the paging information #B is different from a beam used by the first communication apparatus to receive the DCI. The third communication apparatus may define, in the third indication information (for example, the third indication information is the DCI), a field indicating whether QCL of the paging information #B is the same as QCL of the DCI.

Further, the third communication apparatus may further send fourth indication information to the first communication apparatus, where the fourth indication information indicates beam information for communication between the first communication apparatus and the second communication apparatus. The beam information is used by the first communication apparatus to receive the paging information #B. For details, refer to the following descriptions.

In a possible implementation, the first communication apparatus receives the fourth indication information from the third communication apparatus, where the fourth indication information indicates the beam information for the communication between the first communication apparatus and the second communication apparatus.

For example, the third communication apparatus may indicate, to the first communication apparatus by using the DCI or a higher layer configuration in combination with the DCI, the beam information for the communication between the first communication apparatus and the second communication apparatus.

Specifically, the first communication apparatus receives the DCI and the paging information #B from different communication apparatuses. Therefore, the first communication apparatus may determine, based on the fourth indication information, beam information for receiving the paging information #B. To be specific, the fourth indication information indicates a beam that needs to be used by the first communication apparatus to receive the paging information #B, to avoid a case in which the first communication apparatus cannot receive the paging information #B.

In a possible implementation, the first communication apparatus determines whether a carrier used to receive the DCI is the same as a carrier used to receive the paging information #B, to determine whether the QCL of the PDCCH resource is the same as the QCL of the PDSCH resource. If the carrier used to receive the DCI is the same as the carrier used to receive the paging information #B, the QCL of the PDCCH resource is the same as the QCL of the PDSCH resource. If the carrier used to receive the DCI is different from the carrier used to receive the paging information #B, the QCL of the PDCCH resource is different from the QCL of the PDSCH resource.

In a possible implementation, a cell identifier for scrambling the PDCCH resource is different from a cell identifier for scrambling the PDSCH resource.

In embodiments of this application, different cell identifiers are used to scramble different transmission resources, so that reuse of a current implementation can be supported. In this way, implementation complexity of a cross-carrier scheduling scenario of the paging information is reduced.

In this way, the first communication apparatus may determine, based on that the cell identifier for scrambling the PDCCH resource is different from the cell identifier for scrambling the PDSCH resource, whether the carrier corresponding to the PDCCH resource is the same as the carrier corresponding to the PDSCH resource. In this way, cross-carrier scheduling of the paging information can be supported.

It should be understood that, the DCI and the paging information #B that are received by the first communication apparatus may be from different communication apparatuses. For example, the first communication apparatus receives the DCI from the third communication apparatus, and receives the paging information #B from the second communication apparatus. Therefore, there may be a delay between receiving the DCI and receiving the paging information #B by the first communication apparatus.

Generally, a factor that causes the delay includes at least one of the following:
a time difference of arrival between downlink signals received by the first communication apparatus from the third communication apparatus and the second communication apparatus, a timing difference between the third communication apparatus and the second communication apparatus, processing time for carrier switching by the first communication apparatus, and the like.

For example, assuming that a time point of a last symbol of the PDCCH resource is n, a start moment of the PDSCH resource is not earlier than n+T, where T may be understood as a delay between the time point of the last symbol of the PDCCH resource and the start moment of the PDSCH resource. The third communication apparatus may indicate a time interval T between the PDCCH resource and the PDSCH resource by using the third indication information or the fourth indication information.

For example, the third indication information or the fourth indication information further indicates at least one of the following:

a quantity of time units of an interval between the PDCCH resource and the PDSCH resource; or a cyclic prefix (cyclic prefix, CP) length of the PDSCH resource.

Optionally, the time unit may include at least one of the following:

a slot, a mini-slot (mini-slot), a non-slot (non-slot), or a symbol.

Specifically, an NR communication system supports scheduling of the mini-slot, and the mini-slot may start from any OFDM symbol in a slot. The downlink mini-slot may be 2, 4, or 7 OFDM symbols, and the uplink mini-slot may be any length within 1 to 14 OFDM symbols. The mini-slot may also be referred to as a non-slot.

For example, the third indication information or the fourth indication information includes a field #A, indicating a quantity of slots of an interval between the PDCCH resource and the PDSCH resource.

For example, the third indication information or the fourth indication information includes a field #B, indicating a quantity of symbols of an interval between the PDCCH resource and the PDSCH resource.

For example, the third indication information or the fourth indication information includes a field #C, indicating a CP length of the PDSCH resource.

The field #A, the field #B, and the field #C may be combined with each other. For example, the third indication information or the fourth indication information indicates, by using a combination of the field #A and the field #B, the quantity of slots and the quantity of symbols of the interval between the PDCCH resource and the PDSCH resource. For example, the third indication information or the fourth indication information indicates, by using a combination of the field #A and the field #C, the quantity of slots of the interval between the PDCCH resource and the PDSCH resource and the CP length of the PDSCH resource. For example, the third indication information or the fourth indication information indicates, by using a combination of the field #A, the field #B, and the field #C, the quantity of slots of the interval between the PDCCH resource and the PDSCH resource, the quantity of symbols of the interval between the PDCCH resource and the PDSCH resource, and the CP length of the PDSCH resource. For another example, the third indication information or the fourth indication information indicates, by using a combination of the field #B and the field #C, the quantity of symbols of the interval between the PDCCH resource and the PDSCH resource and the CP length of the PDSCH resource.

For example, when the third indication information or the fourth indication information is the DCI, the DCI may include two indications: a slot (slot) indication and a symbol (symbol) indication. In other words, there may be two fields, which respectively indicate the quantity of slots and the quantity of symbols of the interval.

Optionally, the quantity of slots of the interval between the PDCCH resource and the PDSCH resource may be indicated in a time domain resource allocation table that is predefined in a protocol and that is used for paging indication, and a case in which the quantity of slots of the interval is a non-negative integer is supported.

Optionally, the DCI may further indicate the CP length of the PDSCH resource. In a co-carrier scheduling scenario and a cross-carrier scheduling scenario, in embodiments of this application, different CP lengths are supported, a plurality of different CP lengths may be predefined in a protocol, and the CP length of the PDSCH resource is indicated by using the DCI.

In this way, in embodiments of this application, the delay between the PDCCH resource and the PDSCH resource may be indicated to the first communication apparatus.

In embodiments of this application, the delay between the first transmission resource and the second transmission resource is indicated, so that the first communication apparatus can receive the second transmission resource at a proper time point, to avoid a case in which the first communication apparatus fails to receive the paging information because the first communication apparatus receives the paging information in advance. In addition, this can also reduce energy consumption of the first communication apparatus.

It may be understood that, the foregoing paging methods may be combined with each other to form a new technical solution. For example, the paging method 300 and the paging method 400 may be combined to form a new technical solution. For details, refer to content in the summary. Details are not described herein again.

The foregoing describes the method embodiments in embodiments of this application, and the following describes corresponding apparatus embodiments.

To implement the functions in the methods provided in embodiments of this application, both the terminal and the network device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 is a schematic block diagram of a communication apparatus 600 according to an embodiment of this application. The communication apparatus 600 includes a processor 610 and a communication interface 620. The processor 610 and the communication interface 620 are connected to each other through a bus 630. The communication apparatus 600 may be a network device, or may be a terminal device.

Optionally, the communication apparatus 600 further includes a memory 640.

The memory 640 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 640 is configured to store related instructions and related data.

The processor 610 may be one or more central processing units (central processing units, CPUs). When the processor 610 is one CPU, the CPU may be a single-core CPU, or may be a multi-core CPU.

When the communication apparatus 600 is a terminal device 120, the processor 610 in the communication apparatus 600 is configured to read a computer program or instructions stored in the memory 640, to perform, for example, the following operations: receiving paging information #A from a third communication apparatus, where the paging information #A includes first indication information, and the first indication information indicates a first communication apparatus and a second communication apparatus; and establishing a connection to the second communication apparatus or the third communication apparatus based on the paging information #A.

For another example, the following operations may be performed: receiving second indication information from the third communication apparatus, where the second indication information indicates at least one control resource set; and determining a control resource set #A in the at least one control resource set based on a parameter of the first communication apparatus.

For another example, the following operations may be performed: receiving configuration information #A from the third communication apparatus, to configure a transmission resource #A and at least one transmission resource #B; and receiving DCI from the third communication apparatus and paging information from the second communication apparatus based on the configuration information #A.

The foregoing content is merely used as an example for description. When the communication apparatus 600 is the terminal device 120, the communication apparatus 600 is responsible for performing the methods or steps related to the terminal device 120 in the foregoing method embodiments.

When the communication apparatus 600 is a network device 110, the processor 610 in the communication apparatus 600 is configured to read program code stored in the memory 640, to perform, for example, the following operations: determining paging information #A, where the paging information #A includes first indication information, and the first indication information indicates a first communication apparatus and a second communication apparatus; and sending the paging information #A to the first communication apparatus and the second communication apparatus.

For another example, the following operations may be performed: determining the second indication information, which indicates at least one control resource set; and sending the second indication information to the first communication apparatus.

For another example, the following operations may be performed: determining the configuration information #A, used to configure the transmission resource #A and the at least one transmission resource #B; and sending the DCI to the first communication apparatus.

The foregoing content is merely used as an example for description. When the communication apparatus 600 is the network device 110, the communication apparatus 600 is responsible for performing the methods or steps related to the network device 110 in the foregoing method embodiments.

When the communication apparatus 600 is a network device 130, the processor 610 in the communication apparatus 600 is configured to read program instructions stored in the memory 640, to perform, for example, the following operations: receiving paging information #A from a third communication apparatus, where the paging information #A includes first indication information, and the first indication information indicates a first communication apparatus and a second communication apparatus; and establishing a connection to the first communication apparatus or the third communication apparatus based on the paging information #A.

For another example, the paging information #B may be sent to the first communication apparatus.

The foregoing description is merely an example description. For specific content, refer to the content shown in the foregoing method embodiments. In addition, for implementation of each operation in FIG. 6, refer to corresponding descriptions in the method embodiments shown in FIG. 3 to FIG. 5.

FIG. 7 is a schematic block diagram of a communication apparatus 700 according to an embodiment of this application. The communication apparatus 700 may be used in a network device and a terminal device, and may be configured to implement the method in the foregoing embodiments. The communication apparatus 700 includes a transceiver unit 710 and a processing unit 720. The following describes the transceiver unit 710 and the processing unit 720 by using examples.

When the communication apparatus 700 is a network device 110, for example, the transceiver unit 710 is configured to send paging information #A. The processing unit 720 is configured to determine the paging information #A. The transceiver unit 710 may be further configured to send second indication information, configuration information #A, or the like.

The foregoing content is merely used as an example for description. When the communication apparatus 700 is the network device 110, the communication apparatus 700 is responsible for performing the methods or steps related to the network device 110 in the foregoing method embodiments.

When the communication apparatus 700 is a terminal device 120, for example, the transceiver unit 710 is configured to receive the paging information #A. The transceiver unit 710 may be further configured to receive the second indication information, the configuration information #A, or the like. The processing unit 720 is configured to determine a CORESET #A and the like based on a parameter of a first communication apparatus.

The foregoing content is merely used as an example for description. When the communication apparatus 700 is the terminal device 120, the communication apparatus 700 is responsible for performing the methods or steps related to the terminal device 120 in the foregoing method embodiments.

When the communication apparatus 700 is a network device 130, for example, the transceiver unit 710 is configured to receive the paging information #A. The transceiver unit 710 may be further configured to send paging information #B and the like.

The foregoing content is merely used as an example for description. When the communication apparatus 700 is the network device 130, the communication apparatus 700 is responsible for performing the methods or steps related to the network device 130 in the foregoing method embodiments.

In a possible implementation, the communication apparatus 700 further includes a storage unit 730. The storage unit 730 is configured to store a program or code used to perform the foregoing method.

In addition, for implementation of each operation in FIG. 7, refer to corresponding descriptions of the method shown in the foregoing embodiments. Details are not described herein again.

The apparatus embodiments shown in FIG. 6 and FIG. 7 are used to implement the content described in FIG. 3 to FIG. 5 in the foregoing method embodiments. Therefore, for specific execution steps and methods of the apparatuses shown in FIG. 6 and FIG. 7, refer to the content described in the foregoing method embodiments.

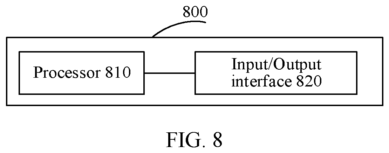

FIG. 8 is a diagram of a communication apparatus 800 according to an embodiment of this application. The communication apparatus 800 may be configured to implement functions of the first communication apparatus, the second communication apparatus, or the third communication apparatus in the foregoing methods. The communication apparatus 800 may be a communication apparatus or a chip in the communication apparatus.

The communication apparatus 800 includes an input/output interface 820 and a processor 810. The input/output interface 820 may be an input/output circuit. The processor 810 may be a signal processor, a chip, or another integrated circuit that can implement the method in this application. The input/output interface 820 is configured to input or output a signal or data.

For example, when the communication apparatus 800 is the first communication apparatus, the input/output interface 820 is configured to receive paging information #A, second indication information, configuration information #A, or the like.

For example, when the communication apparatus 800 is the second communication apparatus, the input/output interface 820 is configured to receive paging information #A, send paging information #B, or the like. The processor 810 is configured to perform some or all steps of any method provided in embodiments of this application.

For example, when the communication apparatus 800 is the third communication apparatus, the input/output interface 820 is configured to send paging information #A, second indication information, configuration information #A, or the like. The processor 810 is configured to perform some or all steps of any method provided in embodiments of this application.

For example, when the communication apparatus 800 is the first communication apparatus, the communication apparatus 800 is configured to perform the steps performed by the first communication apparatus in the possible implementations in the foregoing method embodiments. When the communication apparatus 800 is the second communication apparatus, the communication apparatus 800 is configured to perform the steps performed by the second communication apparatus in the possible implementations in the foregoing method embodiments. When the communication apparatus 800 is the third communication apparatus, the communication apparatus 800 is configured to perform the steps performed by the third communication apparatus in the possible implementations in the foregoing method embodiments.

In a possible implementation, the processor 810 executes instructions stored in the memory, to implement functions implemented by the first communication apparatus, the second communication apparatus, or the third communication apparatus.

Optionally, the communication apparatus 800 further includes a memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the method in embodiments of this application.

The foregoing description of the apparatus in FIG. 8 is merely an example for description. The apparatus can be configured to perform the methods in the foregoing embodiments. For specific content, refer to the descriptions in the foregoing method embodiment. Details are not described herein again.

This application further provides a chip, including a processor. The processor is configured to invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected through an internal connection path, the processor is configured to execute code in a memory, and when the code is executed, the processor is configured to perform the methods in the foregoing examples. Optionally, the chip further includes a memory, and the memory is configured to store a computer program or code.

This application further provides a processor, configured to be coupled to a memory, and configured to perform a method and a function that are related to the first communication apparatus or the second communication apparatus in any one of the foregoing embodiments.

Another embodiment of this application provides a computer program product including instructions. When the computer program product is run on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In the descriptions in embodiments of this application, unless otherwise specified, "a plurality of" means two or more than two. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the terms such as "example" or "for example" are used to represent giving an example, an illustration, or a description.

Any embodiment or design scheme described as an "example" or "for example" in embodiments of this application should not be explained as being more preferred or having more advantages than another embodiment or design scheme. To be precise, a word such as "example" or "for example" is used to present a related concept in a specific manner for ease of understanding.

In the descriptions of embodiments of this application, "/" represents an "or" relationship between associated objects unless otherwise specified. For example, A/B may represent A or B. In this application, "and/or" describes only an association relationship between associated objects, and represents that three relationships may exist. For example, A and/or B may represent the following three cases: A exists alone, both A and B exist, and B exists alone, where A and B may be singular or plural.

It should be understood that "one embodiment" or "an embodiment" mentioned in the entire specification means that particular features, structures, or characteristics related to the embodiment are included in at least one embodiment of this application.

Therefore, "in one embodiment" or "in an embodiment" that appears throughput the whole specification does not necessarily mean a same embodiment. In addition, these particular features, structures, or characteristics may be combined in one or more embodiments in any proper manner.

Sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that "an embodiment" mentioned in the entire specification means that particular features, structures, or characteristics related to the embodiment are included in at least one embodiment of this application.

Therefore, embodiments in the entire specification do not necessarily refer to a same embodiment. In addition, these particular features, structures, or characteristics may be combined in one or more embodiments in any proper manner.

It may be understood that, sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored, or not performed.

In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope in embodiments of this application. Any variation or replacement readily figured out by a person skilled in the art within the technical scope disclosed in embodiments of this application shall fall within the protection scope in embodiments of this application. Therefore, the protection scope in embodiments of this application shall be subject to the protection scope of the claims.

**Claims**

1. A paging method, comprising:

   receiving, by a first communication apparatus, paging information from a third communication apparatus, wherein the paging information comprises first indication information, and the first indication information indicates the first communication apparatus and a second communication apparatus; and
   establishing, by the first communication apparatus, a connection to the second communication apparatus or the third communication apparatus based on the paging information, wherein
   the second communication apparatus is configured to provide a service for the first communication apparatus, or the first communication apparatus is configured to provide a service for the second communication apparatus.

**2.** The method according to claim 1, wherein the first indication information comprises a first identifier and a second identifier;

the first identifier indicates the first communication apparatus; and
the second identifier indicates the second communication apparatus.

**3.** The method according to claim 1, wherein the first indication information comprises an index, and the index is associated with the first communication apparatus and the second communication apparatus.

**4.** The method according to any one of claims 1 to 3, wherein the paging information further comprises beam information for communication between the first communication apparatus and the second communication apparatus.

**5.** The method according to any one of claims 1 to 4, wherein a transmission resource on which the first communication apparatus receives the paging information is the same as a transmission resource on which the second communication apparatus receives the paging information.

**6.** The method according to any one of claims 1 to 5, wherein the second communication apparatus is configured to provide the service for the first communication apparatus, and before the receiving, by a first communication apparatus, paging information from a third communication apparatus,
the method further comprises:

receiving, by the first communication apparatus, second indication information from the third communication apparatus, wherein the second indication information indicates at least one control resource set; and
determining, by the first communication apparatus, a first control resource set in the at least one control resource set based on a parameter of the first communication apparatus, wherein
there is an association relationship between the parameter of the first communication apparatus and the first control resource set; and
each of the at least one control resource set is used to receive downlink control information, and the downlink control information indicates a transmission resource for receiving the paging information.

**7.** The method according to claim 6, wherein the association relationship between the parameter of the first communication apparatus and the first control resource set is predefined in a protocol; or
the association relationship between the parameter of the first communication apparatus and the first control resource set is indicated.

**8.** The method according to claim 6 or 7, wherein the parameter of the first communication apparatus comprises at least one of the following:
a group identifier, a device identifier, or a beam index.

**9.** The method according to any one of claims 6 to 8, wherein the downlink control information further indicates at least one of the following:
a system message change, earthquake and tsunami warning system information, a commercial mobile alert system message, or a notification of stopping paging detection.

**10.** A paging method, comprising:

receiving, by a first communication apparatus, configuration information from a third communication apparatus, wherein the configuration information is used to configure a first transmission resource and at least one second transmission resource; and
receiving, by the first communication apparatus, downlink control information from the third communication apparatus and paging information from a second communication apparatus based on the configuration information, wherein
the first transmission resource is used to receive the downlink control information, the second transmission resource is used to receive the paging information, and the downlink control information indicates to receive the paging information.

**11.** The method according to claim 10, wherein a carrier corresponding to the first transmission resource is different from a carrier corresponding to the second transmission resource.

**12.** The method according to claim 10 or 11, wherein the configuration information comprises at least one of the following:

a cell identifier corresponding to the second transmission resource, a start location and a size of the second transmission resource, a resource number of the second transmission resource, or a carrier number of the second transmission resource.

**13.** The method according to any one of claims 10 to 12, wherein a cell identifier for scrambling the first transmission resource is different from a cell identifier for scrambling the second transmission resource.

**14.** The method according to any one of claims 10 to 13, wherein the method further comprises:
receiving, by the first communication apparatus, third indication information from the third communication apparatus, wherein the third indication information indicates whether quasi co-location of the first transmission resource is the same as quasi co-location of the second transmission resource.

**15.** The method according to any one of claims 10 to 13, wherein the method further comprises:
receiving, by the first communication apparatus, fourth indication information from the third communication apparatus, wherein the fourth indication information indicates beam information for communication between the first communication apparatus and the second communication apparatus.

**16.** The method according to claim 14 or 15, wherein the third indication information or the fourth indication information further indicates at least one of the following:

a quantity of time units of an interval between the first transmission resource and the second transmission resource; or
a cyclic prefix length of the second transmission resource.

**17.** The method according to claim 16, wherein the time unit comprises at least one of the following:
a slot, a mini-slot, a non-slot, or a symbol.

**18.** A paging method, comprising:

determining, by a third communication apparatus, paging information, wherein the paging information comprises first indication information, and the first indication information indicates a first communication apparatus and a second communication apparatus; and
sending, by the third communication apparatus, the paging information to the first communication apparatus and the second communication apparatus, wherein
the second communication apparatus is configured to provide a service for the first communication apparatus, or
the first communication apparatus is configured to provide a service for the second communication apparatus.

**19.** The method according to claim 18, wherein the first indication information comprises a first identifier and a second identifier;

the first identifier indicates the first communication apparatus; and
the second identifier indicates the second communication apparatus.

**20.** The method according to claim 18, wherein the first indication information comprises an index, and the index is associated with the first communication apparatus and the second communication apparatus.

**21.** The method according to any one of claims 18 to 20, wherein the paging information further comprises beam information for communication between the first communication apparatus and the second communication apparatus.

**22.** The method according to any one of claims 18 to 21, wherein a transmission resource on which the first communication apparatus receives the paging information is the same as a transmission resource on which the second communication apparatus receives the paging information.

**23.** The method according to any one of claims 18 to 22, wherein the second communication apparatus is configured to provide the service for the first communication apparatus, and before the sending, by the third communication apparatus, the paging information to the first communication apparatus,
the method further comprises:

> sending, by the third communication apparatus, second indication information to the first communication apparatus, wherein the second indication information indicates at least one control resource set, wherein each of the at least one control resource set is used to receive downlink control information, and the downlink control information indicates a transmission resource for receiving the paging information, and
> there is an association relationship between each of the at least one control resource set and a parameter of the first communication apparatus.

24. The method according to claim 23, wherein the association relationship between each of the at least one control resource set and the parameter of the first communication apparatus is predefined in a protocol; or
the association relationship between each of the at least one control resource set and the parameter of the first communication apparatus is indicated.

25. The method according to claim 23 or 24, wherein the parameter of the first communication apparatus comprises at least one of the following:
a group identifier, a device identifier, or a beam index.

26. The method according to any one of claims 23 to 25, wherein the downlink control information further indicates at least one of the following:
a system message change, earthquake and tsunami warning system information, a commercial mobile alert system message, or a notification of stopping paging detection.

27. A paging method, comprising:

> sending, by a third communication apparatus, configuration information to a first communication apparatus, wherein the configuration information is used to configure a first transmission resource and at least one second transmission resource; and
> sending, by the third communication apparatus, downlink control information to the first communication apparatus, wherein
> the first transmission resource is used to receive the downlink control information, the second transmission resource is used to receive paging information, and the downlink control information indicates to receive the paging information.

28. The method according to claim 27, wherein a carrier corresponding to the first transmission resource is different from a carrier corresponding to the second transmission resource.

29. The method according to claim 27 or 28, wherein the configuration information comprises at least one of the following:
a cell identifier corresponding to the second transmission resource, a start location and a size of the second transmission resource, a resource number of the second transmission resource, or a carrier number of the second transmission resource.

30. The method according to any one of claims 27 to 29, wherein a cell identifier for scrambling the first transmission resource is different from a cell identifier for scrambling the second transmission resource.

31. The method according to any one of claims 27 to 30, wherein before the sending, by the third communication apparatus, downlink control information to the first communication apparatus, the method further comprises:
sending, by the third communication apparatus, third indication information to the first communication apparatus, wherein the third indication information indicates whether quasi co-location of the first transmission resource is the same as quasi co-location of the second transmission resource.

32. The method according to any one of claims 27 to 30, wherein before the sending, by the third communication apparatus, downlink control information to the first communication apparatus, the method further comprises:
sending, by the third communication apparatus, fourth indication information to the first communication apparatus, wherein the fourth indication information indicates beam information for communication between the first communication apparatus and the second communication apparatus.

33. The method according to claim 31 or 32, wherein the third indication information or the fourth indication information further indicates at least one of the following:

a quantity of time units of an interval between the first transmission resource and the second transmission resource; or
a cyclic prefix length of the second transmission resource.

34. The method according to claim 33, wherein the time unit comprises at least one of the following:
a slot, a mini-slot, a non-slot, or a symbol.

35. A communication apparatus, comprising:

a receiving unit, configured to receive paging information from a third communication apparatus, wherein the paging information comprises first indication information, and the first indication information indicates the communication apparatus and a second communication apparatus; and
a processing unit, configured to establish a connection to the second communication apparatus or the third communication apparatus based on the paging information, wherein
the second communication apparatus is configured to provide a service for the communication apparatus, or the communication apparatus is configured to provide a service for the second communication apparatus.

36. The communication apparatus according to claim 35, wherein the first indication information comprises a first identifier and a second identifier;

the first identifier indicates the communication apparatus; and
the second identifier indicates the second communication apparatus.

37. The communication apparatus according to claim 35, wherein the first indication information comprises an index, and the index is associated with the communication apparatus and the second communication apparatus.

38. The communication apparatus according to any one of claims 35 to 37, wherein the paging information further comprises beam information for communication between the communication apparatus and the second communication apparatus.

39. The communication apparatus according to any one of claims 35 to 38, wherein a transmission resource on which the communication apparatus receives the paging information is the same as a transmission resource on which the second communication apparatus receives the paging information.

40. The communication apparatus according to any one of claims 35 to 39, wherein the second communication apparatus is configured to provide the service for the communication apparatus;

the receiving unit is further configured to receive second indication information from the third communication apparatus, wherein the second indication information indicates at least one control resource set; and
the processing unit is further configured to determine a first control resource set in the at least one control resource set based on a parameter of the communication apparatus, wherein
there is an association relationship between the parameter of the communication apparatus and the first control resource set; and
each of the at least one control resource set is used to receive downlink control information, and the downlink control information indicates a transmission resource for receiving the paging information.

41. The communication apparatus according to claim 40, wherein the association relationship between the parameter of the communication apparatus and the first control resource set is predefined in a protocol; or
the association relationship between the parameter of the communication apparatus and the first control resource set is indicated.

42. The communication apparatus according to claim 40 or 41, wherein the parameter of the communication apparatus comprises at least one of the following:
a group identifier, a device identifier, or a beam index.

43. The communication apparatus according to any one of claims 40 to 42, wherein the downlink control information further indicates at least one of the following:
a system message change, earthquake and tsunami warning system information, a commercial mobile alert system message, or a notification of stopping paging detection.

44. A communication apparatus, comprising:

a receiving unit, configured to receive configuration information from a third communication apparatus, wherein the configuration information is used to configure a first transmission resource and at least one second transmission resource, wherein
the receiving unit is further configured to receive downlink control information from the third communication apparatus and paging information from a second communication apparatus based on the configuration information, wherein
the first transmission resource is used to receive the downlink control information, the second transmission resource is used to receive the paging information, and the downlink control information indicates to receive the paging information.

45. The communication apparatus according to claim 44, wherein a carrier corresponding to the first transmission resource is different from a carrier corresponding to the second transmission resource.

46. The communication apparatus according to claim 44 or 45, wherein the configuration information comprises at least one of the following:
a cell identifier corresponding to the second transmission resource, a start location and a size of the second transmission resource, a resource number of the second transmission resource, or a carrier number of the second transmission resource.

47. The communication apparatus according to any one of claims 44 to 46, wherein a cell identifier for scrambling the first transmission resource is different from a cell identifier for scrambling the second transmission resource.

48. The communication apparatus according to any one of claims 44 to 47, wherein
the receiving unit is further configured to receive third indication information from the third communication apparatus, wherein the third indication information indicates whether quasi co-location of the first transmission resource is the same as quasi co-location of the second transmission resource.

49. The communication apparatus according to any one of claims 44 to 47, wherein
the receiving unit is further configured to receive fourth indication information from the third communication apparatus, wherein the fourth indication information indicates beam information for communication between the first communication apparatus and the second communication apparatus.

50. The communication apparatus according to claim 48 or 49, wherein the third indication information or the fourth indication information further indicates at least one of the following:

a quantity of time units of an interval between the first transmission resource and the second transmission resource; or
a cyclic prefix length of the second transmission resource.

51. The communication apparatus according to claim 50, wherein the time unit comprises at least one of the following:
a slot, a mini-slot, a non-slot, or a symbol.

52. A communication apparatus, comprising:

a processing unit, configured to determine paging information, wherein the paging information comprises first indication information, and the first indication information indicates a first communication apparatus and a second communication apparatus; and
a sending unit, configured to send the paging information to the first communication apparatus and the second communication apparatus, wherein
the second communication apparatus is configured to provide a service for the first communication apparatus, or the first communication apparatus is configured to provide a service for the second communication apparatus.

53. The communication apparatus according to claim 52, wherein the first indication information comprises a first identifier and a second identifier;

the first identifier indicates the first communication apparatus; and
the second identifier indicates the second communication apparatus.

54. The communication apparatus according to claim 52, wherein the first indication information comprises an index, and the index is associated with the first communication apparatus and the second communication apparatus.

55. The communication apparatus according to any one of claims 52 to 54, wherein the paging information further comprises beam information for communication between the first communication apparatus and the second communication apparatus.

56. The communication apparatus according to any one of claims 52 to 55, wherein a transmission resource on which the first communication apparatus receives the paging information is the same as a transmission resource on which the second communication apparatus receives the paging information.

57. The communication apparatus according to any one of claims 52 to 56, wherein the second communication apparatus is configured to provide the service for the first communication apparatus; and

the sending unit is further configured to send second indication information to the first communication apparatus, wherein the second indication information indicates at least one control resource set, wherein
each of the at least one control resource set is used to receive downlink control information, and the downlink control information indicates a transmission resource for receiving the paging information, and
there is an association relationship between each of the at least one control resource set and a parameter of the first communication apparatus.

58. The communication apparatus according to claim 57, wherein the association relationship between each of the at least one control resource set and the parameter of the first communication apparatus is predefined in a protocol; or the association relationship between each of the at least one control resource set and the parameter of the first communication apparatus is indicated.

59. The communication apparatus according to claim 57 or 58, wherein the parameter of the first communication apparatus comprises at least one of the following:
a group identifier, a device identifier, or a beam index.

60. The communication apparatus according to any one of claims 57 to 59, wherein the downlink control information further indicates at least one of the following:
a system message change, earthquake and tsunami warning system information, a commercial mobile alert system message, or a notification of stopping paging detection.

61. A communication apparatus, comprising:

a sending unit, configured to send configuration information to a first communication apparatus, wherein the configuration information is used to configure a first transmission resource and at least one second transmission resource, wherein
the sending unit is further configured to send downlink control information to the first communication apparatus, wherein
the first transmission resource is used to receive the downlink control information, the second transmission resource is used to receive paging information, and the downlink control information indicates to receive the paging information.

62. The communication apparatus according to claim 61, wherein a carrier corresponding to the first transmission resource is different from a carrier corresponding to the second transmission resource.

63. The communication apparatus according to claim 61 or 62, wherein the configuration information comprises at least one of the following:
a cell identifier corresponding to the second transmission resource, a start location and a size of the second transmission resource, a resource number of the second transmission resource, or a carrier number of the second transmission resource.

64. The communication apparatus according to any one of claims 61 to 63, wherein a cell identifier for scrambling the first transmission resource is different from a cell identifier for scrambling the second transmission resource.

65. The communication apparatus according to any one of claims 61 to 64, wherein
the sending unit is further configured to send third indication information to the first communication apparatus, wherein the third indication information indicates whether quasi co-location of the first transmission resource is the same as quasi co-location of the second transmission resource.

66. The communication apparatus according to any one of claims 61 to 64, wherein
the sending unit is further configured to send fourth indication information to the first communication apparatus, wherein the fourth indication information indicates beam information for communication between the first communication apparatus and the second communication apparatus.

67. The communication apparatus according to claim 65 or 66, wherein the third indication information or the fourth indication information further indicates at least one of the following:

a quantity of time units of an interval between the first transmission resource and the second transmission resource; or
a cyclic prefix length of the second transmission resource.

68. The communication apparatus according to claim 67, wherein the time unit comprises at least one of the following: a slot, a mini-slot, a non-slot, or a symbol.

69. A communication apparatus, comprising a processor, wherein the processor is coupled to a memory, and the processor is configured to execute a computer program or instructions, to enable the communication apparatus to perform the method according to any one of claims 1 to 34.

70. A communication apparatus, comprising a logic circuit and an input/output interface, wherein the logic circuit is configured to execute a computer program or instructions, to enable the communication apparatus to perform the method according to any one of claims 1 to 34.

71. A computer-readable storage medium, comprising a computer program or instructions, wherein when the computer program or the instructions are run on a computer, the computer is enabled to perform the method according to any one of claims 1 to 34.

72. A computer program product, comprising instructions, wherein when the instructions are run on a computer, the computer is enabled to perform the method according to any one of claims 1 to 34.

FIG. 1

FIG. 2

| Third communication apparatus | First communication apparatus | Second communication apparatus |
|---|---|---|

S310: Send paging information #A, where the paging information #A includes first indication information indicating the first communication apparatus and the second communication apparatus

S320: Establish a connection to the third communication apparatus based on the paging information #A

S320: Establish a connection to the second communication apparatus based on the paging information #A

FIG. 3

| Third communication apparatus | First communication apparatus |
|---|---|

S410: Send second indication information, where the second indication information indicates at least one CORESET

S420: Determine a CORESET #A in the at least one CORESET based on a parameter of the first communication apparatus

FIG. 4

| Third communication apparatus | | First communication apparatus | Second communication apparatus |
|---|---|---|---|

S510: Send configuration information #A, where the configuration information #A is used to configure a transmission resource #A and at least one transmission resource #B

S520: Send downlink control information

S520: Send paging information

**FIG. 5**

Processor 610

Memory 640

Bus 630

Communication interface 620

**FIG. 6**

700

Transceiver unit 710

Processing unit 720

Storage unit 730

**FIG. 7**

800

| Processor 810 | Input/Output interface 820 |
|---|---|

FIG. 8

## INTERNATIONAL SEARCH REPORT

| International application No. |
| --- |
| **PCT/CN2022/106428** |

| A. | CLASSIFICATION OF SUBJECT MATTER |
| --- | --- |

H04W 68/02(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNABS; ENTXTC; VEN; CNKI: UE, UD, 用户, 设备, 终端, 手机, 网络侧, 基站, 休眠, 空闲, 寻呼, 通信, 索引, 波束, 资源, user, device, equipment, cellphone, network, base station, free, idle, paging, communication, index, beam, wave, resource

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2018195907 A1 (GUANGDONG OPPO MOBILE TELECOMMUNICATIONS CORP., LTD.) 01 November 2018 (2018-11-01) description, p. 8, line 3 to p. 17, line 19, and figures 1-7 | 1-3, 5, 18-20, 22, 35-37, 39, 52-54, 56, 69-72 |
| Y | WO 2018195907 A1 (GUANGDONG OPPO MOBILE TELECOMMUNICATIONS CORP., LTD.) 01 November 2018 (2018-11-01) description, p. 8, line 3 to p. 17, line 19, and figures 1-7 | 4, 6-9, 21, 23-26, 38, 40-43, 55, 57-60 |
| Y | CN 114374937 A (VIVO COMMUNICATION TECHNOLOGY CO., LTD.) 19 April 2022 (2022-04-19) description, paragraphs 32-142, and figures 1-6 | 4, 6-9, 21, 23-26, 38, 40-43, 55, 57-60 |
| A | CN 109548144 A (ZTE CORP.) 29 March 2019 (2019-03-29) entire document | 1-72 |
| A | CN 112314022 A (QUALCOMM INC.) 02 February 2021 (2021-02-02) entire document | 1-72 |
| A | WO 2017050498 A1 (SONY CORP. et al.) 30 March 2017 (2017-03-30) entire document | 1-72 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 October 2022** | **27 October 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/106428**

| Patent document cited in search report | | | Publication date (day/month/year) | Patent family member(s) | | | Publication date (day/month/year) |
|---|---|---|---|---|---|---|---|
| WO | 2018195907 | A1 | 01 November 2018 | EP | 3629667 | A1 | 01 April 2020 |
| | | | | JP | 2020518183 | A | 18 June 2020 |
| | | | | US | 2021112524 | A1 | 15 April 2021 |
| | | | | CN | 110547006 | A | 06 December 2019 |
| | | | | KR | 20190140037 | A | 18 December 2019 |
| | | | | US | 2020205120 | A1 | 25 June 2020 |
| CN | 114374937 | A | 19 April 2022 | | None | | |
| CN | 109548144 | A | 29 March 2019 | US | 2019327710 | A1 | 24 October 2019 |
| | | | | CN | 108282861 | A | 13 July 2018 |
| | | | | US | 2022295446 | A1 | 15 September 2022 |
| | | | | WO | 2018127025 | A1 | 12 July 2018 |
| | | | | EP | 3567942 | A1 | 13 November 2019 |
| CN | 112314022 | A | 02 February 2021 | US | 2019394749 | A1 | 26 December 2019 |
| | | | | WO | 2019246425 | A1 | 26 December 2019 |
| | | | | TW | 202002704 | A | 01 January 2020 |
| | | | | KR | 20210021990 | A | 02 March 2021 |
| | | | | EP | 3811697 | A1 | 28 April 2021 |
| WO | 2017050498 | A1 | 30 March 2017 | US | 2018242306 | A1 | 23 August 2018 |
| | | | | US | 2020100244 | A1 | 26 March 2020 |
| | | | | EP | 3826389 | A1 | 26 May 2021 |
| | | | | EP | 3335485 | A1 | 20 June 2018 |

Form PCT/ISA/210 (patent family annex) (January 2015)